# EUROPEAN PATENT SPECIFICATION

(11) **EP 2 068 107 B1**
(45) Date of publication and mention of the grant of the patent: **28.05.2014**
(21) Application number: 07792699.6
(22) Date of filing: 20.08.2007
(51) Int. Cl.: F28F 3/04, F28D 9/00

(54) **HEAT EXCHANGING ELEMENT**
WÄRMETAUSCHELEMENT
ÉLÉMENT D'ÉCHANGE THERMIQUE

(30) Priority: 28.09.2006 JP 2006264050; 13.03.2007 JP 2007063183
(43) Date of publication of application: 10.06.2009
(73) Proprietor: Panasonic Corporation, Kadoma-shi Osaka 571-8501 (JP)
(72) Inventor: SUGIYAMA, Makoto, Osaka (JP); MURAYAMA, Takuya, Osaka (JP)
(74) Representative: Schwabe - Sandmair - Marx
(86) International application number: PCT/JP2007/066085
(87) International publication number: WO 2008/038475

(56) References cited:
- JP-A- 2000 146 467
- JP-A- 2004 286 419
- US-A- 6 059 025

## Description

### TECHNICAL FIELD

The present invention relates to a lamination type heat exchanging element for use in heat exchange type ventilation fans for domestic use, in heat exchange type ventilators for buildings and other structures, and in other air conditioning devices.

US-A-6059025 discloses an element as defined in the preamble of claim 1.

### BACKGROUND ART

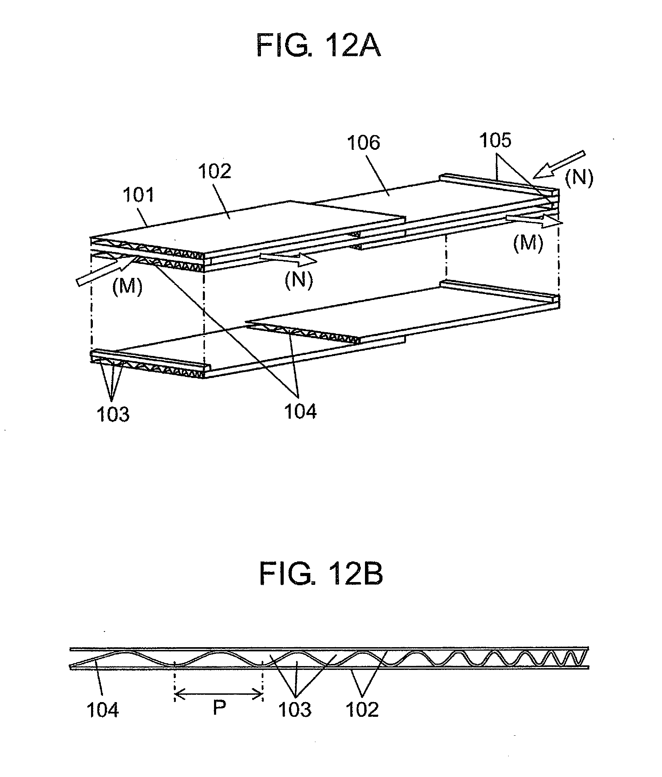

A conventional heat exchanging element is described as follows with reference to Figs. 12A and 12B. Fig. 12A is a schematic perspective view of a conventional heat exchanger. Fig. 12B is a partial sectional view of the conventional heat exchanger.

As shown in Fig. 12A, conventional heat exchanger 101 includes pairs of plates 102, each pair being opposite to and predeterminedly spaced from each other. Between each pair of plates 102 is arranged planer fin 104 having a corrugated cross section so as to form parallel flow channels 103. Adjacent pairs of plates 102 are spaced by spacers 105 for guiding primary airflow "M" and secondary airflow "N". Heat exchanger 101 further includes space portions 106 on the downstream side of parallel flow channels 103 formed by fins 104. Fins 104 and spacers 105 are glued to plates 102.

Heat exchanger 101 includes inlet ports for receiving primary and secondary airflows "M" and "N" on opposite sides thereof, and outlet ports for discharging the airflows "M" and "N" on a side perpendicular to the sides of the inlet ports. The side opposite to the side of the outlet ports is closed. As shown in Fig. 12B, fins 104 are formed at increasingly smaller pitch "P" from one side (the left side in Fig. 12B) to the other (the right side in Fig. 12B) on which the outlet ports are formed. This causes a change in the cross sectional area of parallel flow channels 103, thereby improving the heat exchange efficiency of heat exchanger 101.

In conventional heat exchanger 101, space portions 106 formed on the downstream side of parallel flow channels 103 cause drift inside them because of the absence of components to control airflow. In addition, space portions 106 are too low-strength to maintain the spacing between adjacent plates 102 because of the absence of components to maintain the spacing. This causes primary and secondary airflows "M" and "N" circulating through heat exchanger 101 to drift, thereby decreasing the heat exchange efficiency. Thus, there is a demand for improving both strength and heat exchange efficiency.

In order to reduce the cross sectional area of regions of parallel flow channels 103 that are close to the side on which the outlet ports are formed, the number of junctions between plates 102 and fins 104 is made larger than necessary to maintain the structure of parallel flow channels 103. These junctions cause a decrease in the effective area of the heat exchanger plates. Moreover, the adhesive used to join plates 102 and fins 104 protrudes from the junctions, thereby significantly reducing the effective area of plates 102, and hence, the heat exchange efficiency. Thus, there is a demand for improving the heat exchange efficiency.

In the case where parallel flow channels 103 are formed by arranging independent components on plates 102 instead of fins 104, the width of the flow channel having the largest pitch "P" of parallel flow channels 103 cannot be made larger than the largest pitch "P" with which to maintain the structure of parallel flow channels 103. Furthermore, the design with increasingly smaller pitch "P" causes the number of parallel flow channels 103 to be larger than necessary to maintain the structure of parallel flow channels 103, thereby significantly reducing the effective area of plates 102, and hence the heat exchange efficiency. Thus, there is a demand for improving the heat exchange efficiency.

Since fins 104 and spacers 105 are inserted into between plates 102 and glued thereto, the distance between the top and bottom of the corrugation of fins 104 and the thickness of spacers 105 should be highly uniform. However, in the actual production process, it is difficult to make them uniform because fins 104 have uneven pitch "P". Fins 104 having a large distance between the top and bottom of the corrugation are crushed when glued to plates 102, while fins 104 having a small distance cannot be properly glued to plates 102. This makes it impossible to achieve the designed pitch "P". Furthermore, the poor precision in the thickness direction causes the heat exchanger plates to bend, and the difference in height of pairs of plates 102 causes drift in the heat exchanging element, thereby reducing the heat exchange efficiency. Thus, there is a demand for improving the heat exchange efficiency.

Heat exchanger 101 includes low-strength space portions 106 and parallel flow channels 103 formed with pitch "P" increasingly decreasing from one side to the other on which the outlet ports are formed. As a result, heat exchanger 101 is subjected to variations in strength and hence deformation. The deformation can cause peeling between plates 102 and fins 104 or between plates 102 and spacers 105, thereby increasing airflow leakage. Thus, there is a demand for preventing airflow leakage.
Patent Document 1: Japanese Patent Examined Publication No. S60-238689

### SUMMARY OF THE INVENTION

In view of the conventional problems, it is an object of the present invention to provide a heat exchanging element that eliminates drift in air passages while maintaining its structural strength, thereby providing high heat exchange efficiency and that also prevents airflow leakage due to peeling between the heat exchanger plates and other components.

The heat exchanging element according to the present invention has the features defined in claim 1.

Thus, the present invention provides a heat exchanging element that eliminates drift in the air passages while maintaining its structural strength, thereby providing high heat exchange efficiency, and that also prevents airflow leakage.

### BRIEF DESCRIPTION OF THE DRAWINGS

Fig. 1 is a schematic perspective view of a heat exchanging element according to a first embodiment of the present invention.
Fig. 2A is a schematic perspective view of one unit element as a component of the heat exchanging element seen in a direction X of Fig. 1.
Fig. 2B is a schematic perspective view of one unit element as a component of the heat exchanging element seen in a direction Y of Fig. 1.
Fig. 3 is a schematic production flowchart of the heat exchanging element according to the first embodiment of the present invention.
Fig. 4 is a schematic perspective view of a heat exchanging element according to a second embodiment of the present invention.
Fig. 5A is a schematic perspective view of one unit element as a component of the heat exchanging element seen in a direction X of Fig. 4.
Fig. 5B is a schematic perspective view of one unit element as a component of the heat exchanging element seen in a direction Y of Fig. 4.
Fig. 6 is a schematic perspective view of a heat exchanging element according to a third embodiment of the present invention.
Fig. 7 is a schematic perspective view of one unit element as a component of the heat exchanging element seen in a direction X of Fig. 6.
Fig. 8 is a schematic production flowchart of the heat exchanging element according to the third embodiment of the present invention.
Fig. 9 is a schematic perspective view of a heat exchanging element according to a fourth embodiment of the present invention.
Fig. 10A is a schematic perspective view of one unit element as a component of the heat exchanging element seen in a direction X of Fig. 9.
Fig. 10B is an enlarged schematic perspective view of one unit element as a component of the heat exchanging element seen in the direction X of Fig. 9.
Fig. 10C is an enlarged schematic perspective view of the unit element taken along line A-A of Fig. 10B.
Fig. 11 is a schematic perspective view of one unit element as a component of the heat exchanging element seen in a direction Y of Fig. 9.
Fig. 12A is a schematic perspective view of a conventional heat exchanger.
Fig. 12B is a partial sectional view of the conventional heat exchanger.

### REFERENCE MARKS IN THE DRAWINGS

1a, 1b, 1c, 1d heat exchanging element
2a, 2b, 2c, 2d, 2e, 2f resin frame
3a, 3b, 3c, 3d heat exchanger plate
4a, 4b, 4c, 4d, 4e, 4f, 4g, 4h unit element
5A, 5B, 5C, 5D, 5E, 5F, 5G, 5H air passage
6a, 6b, 6c, 6d, 6e, 6f, 6g, 6h shield portion
7a, 7b, 7c, 7d, 7e, 7f, 7g, 7h flow channel division portion
8a, 8b, 8c, 8d, 8e, 8f, 8g, 8h rectification portion
9a, 9b, 9c, 9d, 9e, 9f engagement projection
10a, 10b, 10c, 10d, 10e, 10f engagement recess
11a, 11b, 11c, 11d, 11e, 11f, 11g, 11h inlet port
12a, 12b, 12c, 12d, 12e, 12f, 12g, 12h outlet port
13a, 13b, 13c, 13d, 13e, 13f, 13g, 13h, 13i, 13j, 13k, 13m, 13n, 13p, 13q,
13r, 13s, 13t, 13u, 13v, 13w, 13x, 13y, 13z flow channel
14a, 14b, 14c, 14d counterflow region
15a, 15b cutting step
16a, 16b molding step
17a, 17b laminating step
18a, 18b bonding step
19a, 19b spaced projection

### DETAILED DESCRIPTION OF PREFERRED EMBODIMENTS

A heat exchanging element accoding to the present invention performs heat exchange by circulating a primary airflow and a secondary airflow through their corresponding air passages alternately formed between a plurality of heat exchanger plates laminated on each other with a predetermined spacing, the heat exchanging element including: counterflow regions in which the primary and secondary airflows flow opposite to each other with the heat exchanger plates therebetween; shield portions for preventing airflow leakage from regions other than the inlet and outlet ports of the primary and secondary airflows in the air passages; flow channel division portions for dividing each of the air passages into a plurality of flow channels, the flow channels divided by the flow channel division portions having different flow channel lengths from each other; and rectification portions arranged in the air passages, the rectification portions providing a predetermined flow velocity distribution of the primary and secondary airflows circulating through the counterflow regions in the flow channels divided by the flow channel division portions.

The heat exchanging element has less drift in the air passages because the air passages are each divided into a plurality of flow channels by the flow channel division portions. The different flow channel lengths of the flow channels divided by the flow channel division portions result in their different ventilation resistances, thereby causing drift in the air passages. The drift, however, is eliminated by providing the rectification portions in the air passages so as to change the ventilation resistances of the flow channels and to form a predetermined flow velocity distribution in the counterflow regions. This results in providing high heat exchange efficiency while maintaining the structural strength of the heat exchanging element. The flow channel division portions play a role in maintaining both the spacing between the heat exchanger plates and the strength of the heat exchanging element, so that the spacing between the heat exchanger plates can be kept uniform. This prevents drift due to uneven spacing between the heat exchanger plates, which have a low structural strength, thereby providing high heat exchange efficiency while maintaining the structural strength of the heat exchanging element.

In the heat exchanging element, the rectification portions may be located somewhere in the air passages other than the counterflow regions.

Thus locating the rectification portions somewhere in the air passages other than the counterflow regions having the greatest effect on the heat exchange efficiency of the heat exchanging element can change the ventilation resistances of the flow channels divided by the flow channel division portions while reducing the effect on the heat exchange efficiency. This eliminates drift in the air passages due to different ventilation resistances of the flow channels caused by their different flow channel lengths generated by the flow channel division portions, thereby forming a predetermined flow velocity distribution in the counterflow regions. This results in providing high heat exchange efficiency.

In the heat exchanging element, the rectification portions may be ventilation resistance members shaped to increase ventilation resistances of the flow channels other than the longest flow channel having the longest flow channel length of all the flow channels divided by the flow channel division portions.

The longest flow channel has a higher ventilation resistance than the other flow channels. Therefore, the flow channels other than the longest flow channel are provided with the rectification portions, which are the ventilation resistance members to increase their ventilation resistances. This eliminates drift in the air passages due to different ventilation resistances of the flow channels caused by their different flow channel lengths, thereby forming a predetermined flow velocity distribution in the counterflow regions. This results in providing high heat exchange efficiency.

In the heat exchanging element, the rectification portions may be partially or wholly located in the inlet ports of the flow channels other than the longest flow channel so that the opening area of each of the inlet ports of the flow channels other than the longest flow channel can be smaller than the opening area of the inlet port of the longest flow channel.

The longest flow channel has a higher ventilation resistance than the other flow channels. Therefore, the flow channels other than the longest flow channel are provided in their inlet ports with the rectification portions so as to reduce the opening area of each of the inlet ports including the rectification portions, thereby increasing their ventilation resistances. This eliminates drift in the air passages due to different ventilation resistances of the flow channels caused by their different flow channel lengths, thereby forming a predetermined flow velocity distribution in the counterflow regions. This results in providing high heat exchange efficiency.

In the heat exchanging element, the rectification portions may be partially or wholly located in the outlet ports of the flow channels other than the longest flow channel so that the opening area of each of the outlet ports of the flow channels other than the longest flow channel can be smaller than the opening area of the outlet port of the longest flow channel.

The longest flow channel has a higher ventilation resistance than the other flow channels. Therefore, the flow channels other than the longest flow channel are provided in their outlet ports with the rectification portions so as to reduce the opening area of each of the outlet ports including the rectification portions, thereby increasing their ventilation resistances. This eliminates drift in the air passages due to different ventilation resistances of the flow channels caused by their different flow channel lengths, thereby forming a predetermined flow velocity distribution in the counterflow regions. This results in providing high heat exchange efficiency.

In the heat exchanging element, the rectification portions may be partially or wholly located in the inlet and outlet ports of the flow channels other than the longest flow channel so that the opening area of each of the inlet ports and the opening area of each of the outlet ports of the flow channels other than the longest flow channel can be smaller than the opening area of the inlet port and the opening area of the outlet port, respectively, of the longest flow channel.

The longest flow channel has a higher ventilation resistance than the other flow channels. Therefore, the flow channels other than the longest flow channel are provided in their inlet and outlet ports with the rectification portions so as to reduce the opening area of each of the inlet ports and the opening area of each of the outlet ports including the rectification portions, thereby increasing their ventilation resistances. This eliminates drift in the air passages due to different ventilation resistances of the flow channels caused by their different flow channel lengths, thereby forming a predetermined flow velocity distribution in the counterflow regions. This results in providing high heat exchange efficiency.

In the heat exchanging element, the rectification portions may be shaped to decrease ventilation resistances of the flow channels having flow channel lengths longer than an average flow channel length of the flow channels divided by the flow channel division portions and to increase ventilation resistances of the flow channels having flow channel lengths shorter than the average flow channel length.

Thus, the rectification portions are provided so as to decrease ventilation resistances of the flow channels having flow channel lengths longer than the average flow channel length, and to increase ventilation resistances of the flow channels having flow channel lengths shorter than the average flow channel length. This increases the flow velocities of the flow channels having flow channel lengths longer than the average flow channel length and decreases the flow velocities of the flow channels having flow channel lengths shorter than the average flow channel length. This eliminates drift in the air passages due to different ventilation resistances of the flow channels caused by their different flow channel lengths generated by the flow channel division portions, thereby forming a predetermined flow velocity distribution in the counterflow regions. This results in providing high heat exchange efficiency.

In the heat exchanging element, the rectification portions may be partially or wholly located in the inlet ports of the flow channels so that the opening area of each of the inlet ports of the flow channels having longer flow channel lengths than the average flow channel length can be larger than the average opening area of the inlet ports, and that the opening area of each of the inlet ports of the flow channels having shorter flow channel lengths than the average flow channel length can be smaller than the average opening area of the inlet ports.

The flow channels having flow channel lengths longer than the average flow channel length relatively have large ventilation resistances and low flow velocities. The flow channels having flow channel lengths shorter than the average flow channel length relatively have small ventilation resistances and high flow velocities. However, the provision of the rectification portions in the inlet ports allows the opening area of each of the inlet ports of the flow channels having flow channel lengths longer than the average flow channel length to be larger than the average opening area of the inlet ports, thereby decreasing their ventilation resistances. The provision of the rectification portions in the inlet ports also allows the opening area of each of the inlet ports of the flow channels having flow channel lengths shorter than the average flow channel length to be smaller than the average opening area of the inlet ports, thereby increasing their ventilation resistances. This eliminates drift in the air passages due to different ventilation resistances of the flow channels caused by their different flow channel lengths generated by the flow channel division portions, thereby forming a predetermined flow velocity distribution in the counterflow regions. This results in providing high heat exchange efficiency.

In the heat exchanging element, the rectification portions may be partially or wholly located in the outlet ports of the flow channels so that the opening area of each of the outlet ports of the flow channels having longer flow channel lengths than the average flow channel length can be larger than the average opening area of the outlet ports, and that the opening area of each of the outlet ports of the flow channels having shorter flow channel lengths than the average flow channel length can be smaller than the average opening area of the outlet ports.

The flow channels having flow channel lengths longer than the average flow channel length relatively have large ventilation resistances and low flow velocities. The flow channels having flow channel lengths shorter than the average flow channel length relatively have small ventilation resistances and high flow velocities. However, the provision of the rectification portions in the outlet ports allows the opening area of each of the outlet ports of the flow channels having flow channel lengths longer than the average flow channel length to be larger than the average opening area of the outlet ports, thereby decreasing their ventilation resistance. The provision of the rectification portions in the outlet ports also allows the opening area of each of the outlet ports of the flow channels having flow channel lengths shorter than the average flow channel length to be smaller than the average opening area of the outlet ports, thereby increasing their ventilation resistance. This eliminates drift in the air passages due to different ventilation resistances of the flow channels caused by their different flow channel lengths generated by the flow channel division portions, thereby forming a predetermined flow velocity distribution in the counterflow regions. This results in providing high heat exchange efficiency.

In the heat exchanging element, the rectification portions may be partially or wholly located in the inlet and outlet ports of the flow channels so that the opening area of each of the inlet ports and the opening area of each of the outlet ports of the flow channels having longer flow channel lengths than the average flow channel length can be larger than the average opening area of the inlet ports and the average opening area of the outlet ports, respectively, and that the opening area of each of the inlet ports and the opening area of each of the outlet ports of the flow channels having shorter flow channel lengths than the average flow channel length can be smaller than the average opening area of the inlet ports and the average opening area of the outlet ports, respectively.

The flow channels having flow channel lengths longer than the average flow channel length relatively have large ventilation resistances and low flow velocities. The flow channels having flow channel lengths shorter than the average flow channel length relatively have small ventilation resistances and high flow velocities. However, the provision of the rectification portions in the inlet and outlet ports allows the opening area of each of the inlet ports and the opening area of each of the outlet ports of the flow channels having flow channel lengths longer than the average flow channel length to be larger than the average opening area of the inlet ports and the average opening area of the outlet ports, respectively, thereby decreasing their ventilation resistances. The provision of the rectification portions in the inlet and outlet ports also allows the opening area of each of the inlet ports and the opening area of each of the outlet ports of the flow channels having flow channel lengths shorter than the average flow channel length to be smaller than the average opening area of the inlet ports and the average opening area of the outlet ports, respectively, thereby increasing their ventilation resistances. This eliminates drift in the air passages due to different ventilation resistances of the flow channels caused by their different flow channel lengths generated by the flow channel division portions, thereby forming a predetermined flow velocity distribution in the counterflow regions. This results in providing high heat exchange efficiency.

In the heat exchanging element, the flow channel division portions may be partially integrated with the rectification portions, and the rectification portions may be formed by bending parts of the flow channel division portions in such a manner that the opening area of flow channels having longer flow channel lengths than the average flow channel length of the flow channels divided by the flow channel division portions can be larger than the average opening area, and that the opening area of flow channels having shorter flow channel lengths than the average flow channel length can be smaller than the average opening area.

The flow channels having flow channel lengths longer than the average flow channel length relatively have large ventilation resistances and low flow velocities. The flow channels having flow channel lengths shorter than the average flow channel length relatively have small ventilation resistances and high flow velocities. However, the opening area of the flow channels having flow channel lengths longer than the average flow channel length can be larger than the average opening area so as to decrease their ventilation resistances, thereby increasing the flow velocities. The opening area of the flow channels having flow channel lengths shorter than the average flow channel length can be smaller than the average opening area so as to increase their ventilation resistances, thereby decreasing the flow velocities. The rectification portions, which are formed by bending parts of the flow channel division portions, hardly decrease the effective area of the heat exchanger plates or do not decrease the total opening area of the inlet ports or the outlet ports. This eliminates drift in the air passages due to different ventilation resistances of the flow channels caused by their different flow channel lengths generated by the flow channel division portions, thereby forming a predetermined flow velocity distribution in the counterflow regions. This results in providing high heat exchange efficiency.

In the heat exchanging element, the rectification portions that increase ventilation resistances of the flow channels divided by the flow channel division portions may be integrally formed with the flow channel division portions, the rectification portions being formed as projections on the surfaces of the flow channel division portions that are in contact with the flow channels.

Thus forming the projections as the rectification portion on the surfaces of the flow channel division portions that are in contact with the flow channels makes it possible to determine the ventilation resistance of each flow channel freely. This eliminates drift in the air passages due to different ventilation resistances of the flow channels caused by their different flow channel lengths generated by the flow channel division portions, thereby forming a predetermined flow velocity distribution in the counterflow regions. Furthermore, the projections eliminate drift in each flow channel, thereby providing high heat exchange efficiency.

In the heat exchanging element, the rectification portions that increase ventilation resistances of the flow channels divided by the flow channel division portions may be integrally formed with the shield portions, the rectification portions being formed as projections on some or all surfaces of the shield portions that are in contact with the opening sections of the flow channels.

Thus forming the projections on the surfaces of the shield portions that are in contact with the opening sections makes it possible to determine the ventilation resistance of each flow channel freely. This eliminates drift in the air passages due to different ventilation resistances of the flow channels caused by their different flow channel lengths generated by the flow channel division portions, thereby forming a predetermined flow velocity distribution in the counterflow regions. Furthermore, the projections eliminate drift in each flow channel, thereby providing high heat exchange efficiency.

In the heat exchanging element, the projections may be high on the opening side and low on the inner side.

Making the projections high on the opening side and low on the inner side can eliminate drift in the air passages while minimizing airflow disorder due to abrupt expansion or contraction of the flow channels, thereby forming a predetermined flow velocity distribution in the counterflow regions. Furthermore, the projections eliminate drift in each flow channel, thereby providing high heat exchange efficiency.

In the heat exchanging element, the rectification portions that increase ventilation resistances of the flow channels divided by the flow channel division portions may be formed as projections on the heat exchanger plates.

Thus forming the projections on the heat exchanger plates makes it possible to determine the ventilation resistance of each flow channel freely. This eliminates drift in the air passages due to different ventilation resistances of the flow channels caused by their different flow channel lengths generated by the flow channel division portions, thereby forming a predetermined flow velocity distribution in the counterflow regions. Furthermore, the projections eliminate drift in each flow channel, thereby providing high heat exchange efficiency.

In the heat exchanging element, the projections may be formed between one side surface of the heat exchanger plates and a reverse side of the flow channel division portions.

Thus forming the projections between one side surface of the heat exchanger plates and a reverse side of the flow channel division portions makes it possible to determine the ventilation resistance of each flow channel freely without decreasing the effective area of the heat exchanger plates. This eliminates drift in the air passages due to different ventilation resistances of the flow channels caused by their different flow channel lengths generated by the flow channel division portions, thereby forming a predetermined flow velocity distribution in the counterflow regions. Furthermore, the projections eliminate drift in each flow channel, thereby providing high heat exchange efficiency.

In the heat exchanging element, the heat exchanger plates may be integrally molded with resin frames using an injection molding process so as to form a plurality of unit elements, the heat exchanger plates being made of paper or resin and having heat conductivity, moisture permeability, and a gas shielding property, the resin frames being made of synthetic resin and forming the air passages including the shield portions, the flow channel division portions, and the rectification portions, and the plurality of unit elements being laminated on each other.

Each of the heat exchanger plates is inserted into an injection mold for molding resin frames, and molten resin is injected into the mold so that resin frames are integrally molded with the heat exchanger plate. This improves the joint strength between the heat exchanger plate and the resin frames each having the shield portions, the flow channel division portions, and the rectification portions. As a result, this prevents airflow leakage due to peeling between the heat exchanger plate and the resin frames. The use of the injection molding process to integrally mold the shield portions, the flow channel division portions, and the rectification portions provides high-precision spacing between the heat exchanger plates in the thickness direction. This enables the heat exchanging element to maintain its strength, thus preventing bending of the heat exchanger plates, which may be caused if the precision in the thickness direction is low while the unit elements are alternately laminated, and also preventing drift in the air passages which may be caused when the unit elements do not have a uniform height. This results in providing high heat exchange efficiency.

In the heat exchanging element, the heat exchanger plates made of thermoplastic resin may be each provided with an uneven surface structure so as to form the unit elements, the unit elements being laminated on each other.

The unit elements are formed by providing an uneven surface structure on the heat exchanger plates of thermoplastic resin by vacuum forming or the like. The heat exchanger plates, the shield portions, the flow channel division portions, and the rectification portions are all made of the same material. This prevents peeling between the heat exchanger plates and other components, and hence, airflow leakage due to peeling. The integral molding of the shield portions, the flow channel division portions, and the rectification portions provides high-precision spacing between the heat exchanger plates in the thickness direction. This enables the heat exchanging element to maintain its strength, thus preventing bending of the heat exchanger plates, which may be caused if the precision in the thickness direction is low while the unit elements are alternately laminated, and also preventing drift in the air passages which may be caused when the unit elements do not have a uniform height. This results in providing high heat exchange efficiency.

In the heat exchanging element, the primary airflow and the secondary airflow circulating the flow channels divided by the flow channel division portions may be subjected to heat exchange in order of being at a right angle or an oblique angle to each other, being opposite to each other, and being at a right angle or an oblique angle to each other with the heat exchanger plates therebetween.

The presence of the regions in which the primary airflow and the secondary airflow flow opposite to each other with the heat exchanger plates therebetween provides high heat exchange efficiency.

In the heat exchanging element, the heat exchanging element may have a rectangular picture plane in the lamination direction, the inlet ports of the primary airflow on the short side, the inlet ports of the secondary airflow on the other short side, and the outlet ports of the primary airflow and the outlet ports of the secondary airflow on the long side.

The primary airflow is drawn in from the short side and drawn out from a portion of the long side. The secondary airflow is drawn in from the short side opposite to the side on which the inlet ports of the primary airflow are formed, and is drawn out from a portion of the long side on which the outlet ports of the primary airflow are formed. The rectangular picture plane of the heat exchanging element in the lamination direction allows the primary and secondary airflows to flow opposite to each other in long regions with the heat exchanger plates therebetween, thereby providing high heat exchange efficiency.

The embodiments of the present invention will be described as follows with reference to drawings.

### FIRST EMBODIMENT

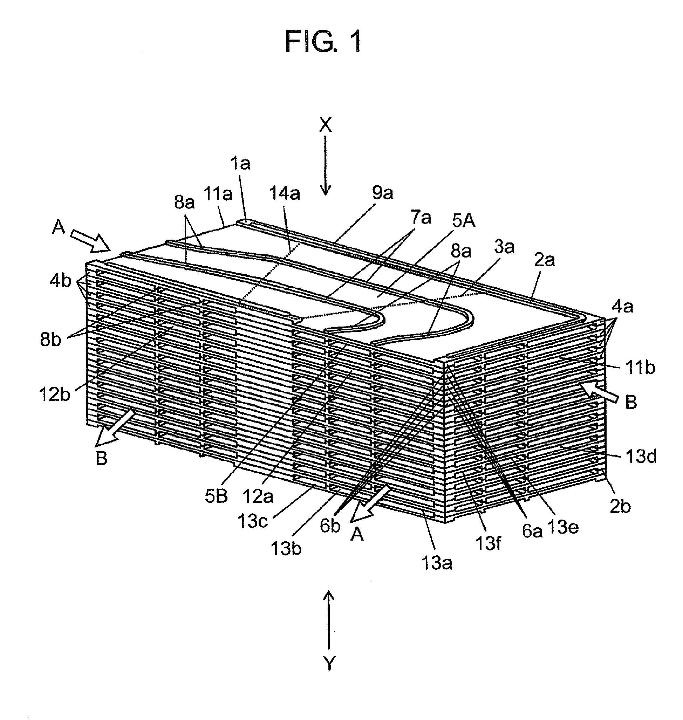

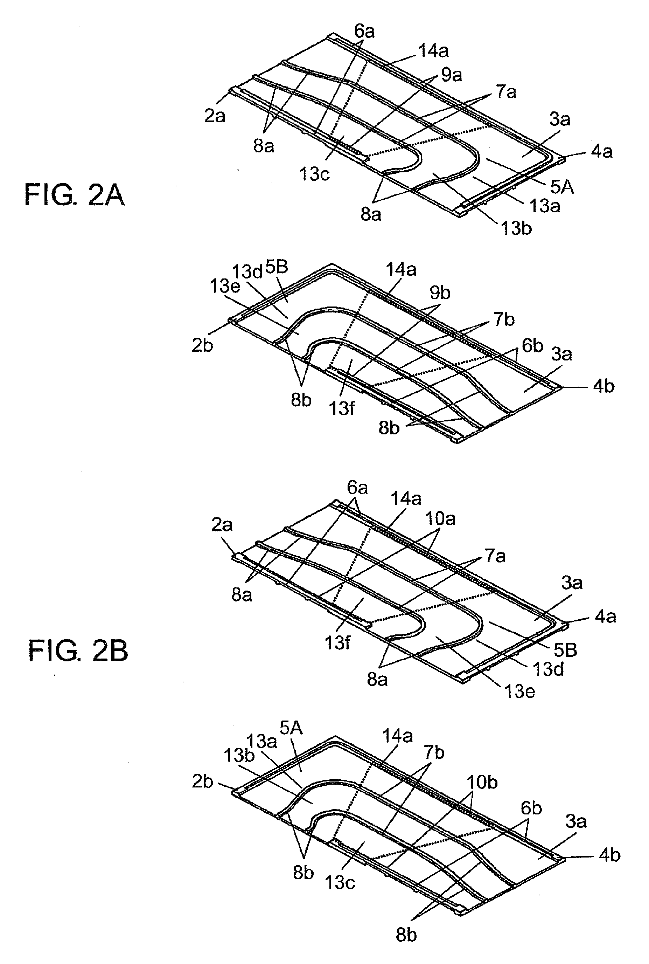

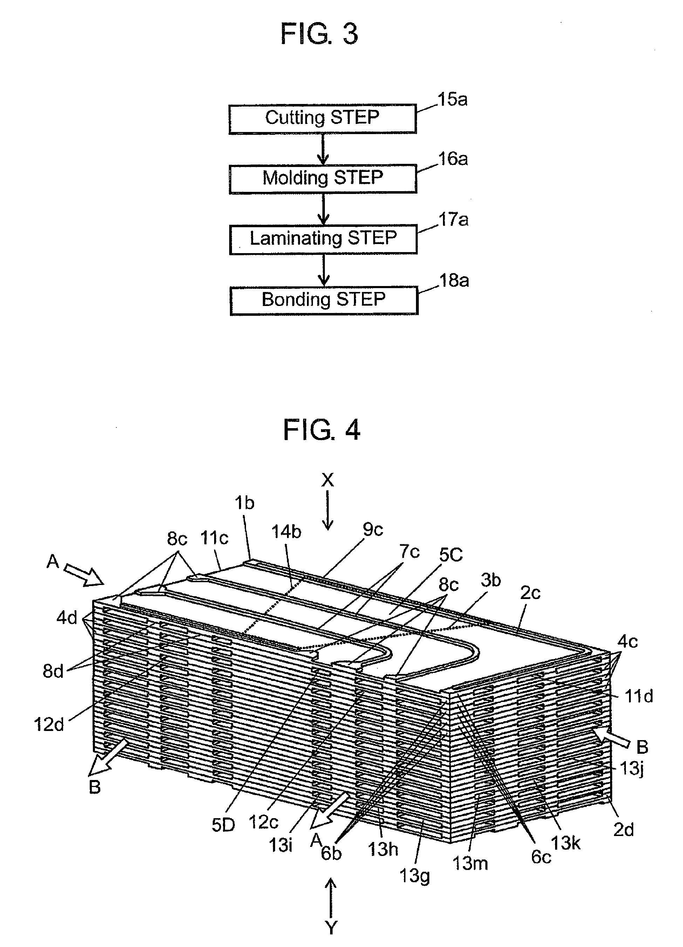

Fig. 1 is a schematic perspective view of a heat exchanging element according to a first embodiment of the present invention. Fig. 2A is a schematic perspective view of one unit element as a component of the heat exchanging element seen in a direction X of Fig. 1. Fig. 2B is a schematic perspective view of one unit element as a component of the heat exchanging element seen in a direction Y of Fig. 1. Fig. 3 is a schematic production flowchart of the heat exchanging element.

As shown in Figs. 1, 2A, and 2B, heat exchanging element 1a includes unit elements 4a and unit elements 4b alternately laminated on each other. Each unit element 4a includes heat exchanger plate 3a integrally molded with resin frame 2a. Each unit element 4b includes heat exchanger plate 3a integrally molded with resin frame 2b. Each heat exchanger plate 3a includes air passage 5A on its top surface and air passage 5B on its bottom surface. Heat exchanging element 1a circulates primary airflow "A" through air passage 5A, and secondary airflow "B" through air passage 5B, thereby enabling heat exchange between primary and secondary airflows "A" and "B" via heat exchanger plates 3a.

Unit elements 4a are each formed by integrally molding heat exchanger plate 3a with resin frame 2a including shield portions 6a, flow channel division portions 7a, rectification portions 8a, engagement projections 9a, and engagement recesses 10a. Unit elements 4b are each formed by integrally molding heat exchanger plate 3a with resin frame 2b including shield portions 6b, flow channel division portions 7b, rectification portions 8b, engagement projections 9b, and engagement recesses 10b. Unit elements 4a and 4b have a picture plane with a long side of 145 mm and a short side of 65 mm in the lamination direction.

The alternate lamination of unit elements 4a and unit elements 4b enables heat exchanging element 1a to have inlet ports 11a and outlet ports 12a of primary airflow "A" and inlet ports 11b and outlet ports 12b of secondary airflow "B". Air passage 5A is divided into three flow channels 13a, 13b, and 13c by flow channel division portions 7a. Air passage 5B is divided into three flow channels 13d, 13e, and 13f by flow channel division portions 7b.

Shield portions 6a and 6b are arranged on the top and bottom surfaces, respectively, of heat exchanger plate 3a so as to form the outer frames excluding inlet ports 11a, 11b and outlet ports 12a, 12b. The linear portions of shield portions 6a and 6b have a width of 4 mm and a height of 0.75 mm.

Flow channel division portions 7a and 7b, which have a width of 1.5 mm and a height of 0.75 mm, are arranged on the top and bottom surfaces, respectively, of heat exchanger plate 3a so as to fit each other when unit elements 4a and 4b are laminated. Rectification portions 8a, which have a width of 1.5 mm and a height of 0.75 mm, are integrally formed with flow channel division portions 7a by bending flow channel division portions 7a in the vicinity of inlet ports 11a, 11b and outlet ports 12a, 12b. Rectification portions 8b, which have a width of 1.5 mm and a height of 0.75 mm, are integrally formed with flow channel division portions 7b by bending flow channel division portions 7b in the vicinity of inlet ports 11a, 11b and outlet ports 12a, 12b. As a result, rectification portions 8a and 8b are conformed to each other when unit elements 4a and 4b are laminated.

Rectification portions 8a and 8b are formed by bending flow channel division portions 7a and 7b in the following conditions. The opening area of each of inlet and outlet ports 11a, 12a of flow channel 13a, and the opening area of each of inlet and outlet ports 11b, 12b of flow channel 13d which have a flow channel length longer than the average flow channel length are made larger than the average opening area. The opening area of each of inlet and outlet ports 11a, 12a of flow channels 13b, 13c and the opening area of each of inlet and outlet ports 11b, 12b of flow channels 13e, 13f which have flow channel lengths shorter than the average flow channel length are made smaller than the average opening area.

The "flow channel length" in the present specification indicates the center-line length of each flow channel. The flow channel lengths in the present embodiment are as follows: flow channels 13a and 13d: 182 mm, flow channels 13b and 13e: 142 mm, and flow channels 13c and 13f: 105 mm. The average flow channel length is 143 mm. The "opening area" in the present specification indicates the area of the inlet or outlet port of one flow channel. The "total opening area" indicates the sum of the opening areas of the inlet ports or outlet ports of the flow channels of one unit element. The "average opening area" indicates an area obtained by dividing the total opening area by the number of flow channels. The opening areas in the present embodiment are as follows: inlet ports 11a and 11b respectively of flow channel 13a and 13d: 40.5 mm²; outlet ports 12a and 12b respectively of flow channels 13a and 13d: 36 mm²; inlet ports 11a and 11b respectively of flow channels 13b and 13e: 24 mm²; outlet ports 12a and 12b respectively of flow channels 13b and 13e: 25.5 mm²; inlet ports 11a and 11b respectively of flow channels 13c and 13f: 16.5 mm²; and outlet ports 12a and 12b respectively of flow channels 13c and 13f: 19.5 mm². The total opening area of inlet ports 11a, 11b and the total opening area of outlet ports 12a, 12b are both 81 mm². The average opening area of inlet ports 11a, 11b, and the average opening area of outlet ports 12a, 12b are both 27 mm².

Engagement projections 9a and 9b, which have a width of 1.5 mm and a height of 0.4 mm, are arranged on shield portions 6a and 6b, respectively formed on the top surface of each heat exchanger plate 3a. Engagement recesses 10a and 10b, which have a width of 1.6 mm and a depth of 0.5 mm, are arranged on shield portions 6a and 6b, respectively formed on the bottom surface of each heat exchanger plate 3a. When unit elements 4a and 4b are alternately laminated, engagement projections 9a and engagement recesses 10b are engaged with each other, and engagement projections 9b and engagement recesses 10a are engaged with each other.

Heat exchanging element 1a is a counter flow type in which primary and secondary airflows "A" and "B" flow at a right angle or an oblique angle to each other with heat exchanger plates 3a therebetween in the vicinity of inlet ports 11a, 11b and outlet ports 12a, 12b, and flow opposite to each other with heat exchanger plates 3a therebetween in the center. The regions in which primary and secondary airflows "A" and "B" flow opposite to each other with heat exchanger plates 3a therebetween are referred to as counterflow regions 14a. In counterflow regions 14a, flow channels 13a-13f have a width of 18 mm.

Resin frames 2a and 2b are formed of a thermoplastic resin such as polystyrene (ABS, AS, or PS) or polyolefin (PP or PE). Heat exchanger plates 3a are cut into a rectangular shape having a long side of 143 mm and a short side of 63 mm. The thickness is 0.2 to 0.01 mm, and preferably 0.1 to 0.01 mm. Heat exchanger plates 3a can be made of Japanese paper, flame retardant paper, or specially-treated paper having heat conductivity, moisture permeability, and a gas shielding property, or can be a moisture-permeable film or a resin sheet or film having only heat conductivity such as polyester, polystyrene (ABS, AS, or PS), or polyolefin (PP or PE).

As shown in Fig. 3, the production process of heat exchanging element 1a includes cutting step 15a, molding step 16a, laminating step 17a, and bonding step 18a performed in this order. Cutting step 15a cuts heat exchanger plates 3a into shape. Molding step 16a integrally molds heat exchanger plate 3a with resin frame 2a so as to form unit element 4a, and also integrally molds heat exchanger plate 3a with resin frame 2b so as to form unit element 4b. Laminating step 17a alternately laminates unit elements 4a and unit elements 4b on each other. Bonding step 18a bonds unit elements 4a and 4b thus laminated.

Cutting step 15a of the present embodiment cuts each heat exchanger plate 3a into a rectangular shape having a long side of 143 mm and a short side of 63 mm.

Molding step 16a inserts heat exchanger plate 3a into an injection mold, injects molten resin into the mold, and solidifies the molten resin so as to form resin frames 2a and 2b. Resin frame 2a is joined to heat exchanger plate 3a, and resin frame 2b is joined to heat exchanger plate 3a so as to form unit elements 4a and 4b.

Laminating step 17a laminates unit elements 4a and unit elements 4b alternately on each other so that engagement projections 9a are engaged with engagement recesses 10b, and engagement projections 9b are engaged with engagement recesses 10a.

Bonding step 18a melts the four corners of unit elements 4a and 4b thus laminated, and parts of the edges of the regions where inlet ports 11a, 11b or outlet ports 12a, 12b are not formed. Bonding step 18a then solidifies the molten resin so as to join unit elements 4a and 4b thus laminated. The resin can be melted by ultrasonic welding.

With the above structure, heat exchanging element 1a allows primary and secondary airflows "A" and "B" to circulate through their corresponding air passages arranged alternately to prevent airflows "A" and "B" from being mixed with each other. Primary and secondary airflows "A" and "B" flow at a right angle or an oblique angle to each other with heat exchanger plates 3a therebetween in the vicinity of inlet ports 11a, 11b and outlet ports 12a, 12b, and flow opposite to each other with heat exchanger plates 3a therebetween in the center, that is, counterflow regions 14a. Primary airflow "A" is drawn in from the short side and drawn out from a portion of the long side. Secondary airflow "B" is drawn in from the short side opposite to the side on which inlet ports 11a of primary airflow "A" are formed, and is drawn out from a portion of the long side on which outlet ports 12a of primary airflow "A" are formed. The rectangular picture plane of heat exchanging element 1a in the lamination direction allows primary and secondary airflows "A" and "B" to flow opposite to each other in large counterflow regions 14a with heat exchanger plates 3a therebetween, thereby providing high heat exchange efficiency.

Shield portions 6a, 6b, flow channel division portions 7a, 7b, and rectification portions 8a, 8b play a role in maintaining both the spacing between heat exchanger plates 3a and the strength of heat exchanging element 1a, so that the spacing between heat exchanger plates 3a can be kept uniform. This prevents drift due to uneven spacing between heat exchanger plates 3a, which may be caused when the structural strength is low. As a result, high heat exchange efficiency can be provided while maintaining the structural strength.

Air passages 5A and 5B are divided into flow channels 13a-13c and 13d-13f, respectively, by flow channel division portions 7a and 7b so as to reduce the drift in air passages 5A and 5B. Flow channels 13a-13c and 13d-13f divided by flow channel division portions 7a and 7b, respectively, have different flow channel lengths, and hence, different ventilation resistances, thereby causing drift. The drift, however, is eliminated by providing rectification portions 8a and 8b in air passages 5A and 5B so as to change the ventilation resistances of flow channels 13a-13f. Furthermore, a predetermined flow velocity distribution is formed in counterflow regions 14a so as to provide high heat exchange efficiency. The "predetermined flow velocity distribution" indicates approximately uniform flow velocities of flow channels 13a-13f in counterflow regions 14a. However, the flow velocity distribution differs depending on the design condition of the heat exchange type ventilation fan, and is properly changed depending on the trade off between the size of heat exchanging element 1a and the required ventilation resistance. Therefore, the flow velocity distribution may be designed so that the flow channel having the longest flow length has the highest velocity, instead of that all flow channels have approximately uniform velocities.

In air passages 5A and 5B, rectification portions 8a and 8b are located somewhere other than counterflow regions 14a having the greatest effect on the heat exchange efficiency of heat exchanging element 1a. This eliminates drift in air passages 5A and 5B due to different ventilation resistances of flow channels 13a-13f caused by their different flow channel lengths generated by flow channel division portions 7a and 7b, thereby forming a predetermined flow velocity distribution in counterflow regions 14a. This results in providing high heat exchange efficiency.

Flow channels 13a and 13d having a flow channel length longer than the average flow channel length relatively have a large ventilation resistance and a low flow velocity. Flow channels 13b, 13c, 13e, and 13f having flow channel lengths shorter than the average flow channel length relatively have small ventilation resistances and high flow velocities. However, the provision of rectification portions 8a and 8b in inlet ports 11a, 11b and outlet ports 12a, 12b allows the opening area of inlet ports 11a, 11b and the opening area of outlet ports 12a, 12b of flow channels 13a and 13d having a flow channel length longer than the average flow channel length to be larger than the average opening area. This decreases the ventilation resistance of flow channels 13a and 13d, thereby increasing the flow velocity. The provision of rectification portions 8a and 8b also allows the opening area of inlet ports 11a, 11b and the opening area of outlet ports 12a, 12b of flow channels 13b, 13c, 13e, and 13f having flow channel lengths shorter than the average flow channel length to be made smaller than the average opening area. This increases the ventilation resistances of flow channels 13b, 13c, 13e, and 13f, thereby decreasing the flow velocities. Rectification portions 8a and 8b, which are formed by bending parts of flow channel division portions 7a and 7b, hardly decrease the effective area of heat exchanger plates 3a or do not decrease the total opening area of inlet ports 11a, 11b or outlet ports 12a, 12b. This eliminate drift in air passages 5A and 5B due to different ventilation resistances of flow channels 13a-13f caused by their different lengths generated by flow channel division portions 7a and 7b so as to form a predetermined flow velocity distribution in counterflow regions 14a. This results in providing high heat exchange efficiency.

Rectification portions 8a and 8b are arranged in inlet ports 11a, 11b and outlet ports 12a, 12b in the present embodiment. However, these portions 8a and 8b may alternatively be arranged in either inlet ports 11a and 11b or outlet ports 12a and 12b so as to obtain the same action and effect by changing the size of the opening areas.

As described above, heat exchanger plate 3a is inserted into an injection mold for molding resin frames 2a and 2b, and molten resin is injected into the mold and solidified to form resin frames 2a and 2b. Resin frame 2a is joined to heat exchanger plate 3a, and resin frame 2b is joined to heat exchanger plate 3a. As a result, resin frames 2a and 2b are integrally molded with heat exchanger plates 3a. This improves the joint strength between heat exchanger plate 3a and resin frame 2a having shield portions 6a, flow channel division portions 7a, and rectification portions 8a, and also between heat exchanger plate 3a and resin frame 2b having shield portions 6b, flow channel division portions 7b, and rectification portions 8b. As a result, this prevents airflow leakage due to peeling between heat exchanger plate 3a and resin frames 2a, 2b.

The use of the injection molding process to integrally mold shield portions 6a, flow channel division portions 7a, and rectification portions 8a and to integrally mold shield portions 6b, flow channel division portions 7b, rectification portions 8b provides high-precision spacing between heat exchanger plates 3a in the thickness direction. This enables heat exchanging element 1a to maintain its strength, thus preventing bending of heat exchanger plates 3a, which may be caused if the precision in the thickness direction is low while unit elements 4a and 4b are alternately laminated, and also preventing drift in air passages 5A and 5B which may be caused when unit elements 4a and 4b do not have a uniform height. This results in providing high heat exchange efficiency.

In the present embodiment, specific dimensions are given for resin frames 2a and 2b, heat exchanger plates 3a, unit elements 4a and 4b, shield portions 6a and 6b, flow channel division portions 7a and 7b, rectification portions 8a and 8b, engagement projections 9a and 9b, engagement recesses 10a and 10b, inlet ports 11a and 11b, outlet ports 12a and 12b, and flow channels 13a-13f. These dimensions, however, are not limited to those of the present embodiment, and can be properly determined depending on the required performance of heat exchanging element 1a so as to obtain the action and effect equivalent to those of the present embodiment.

### SECOND EMBODIMENT

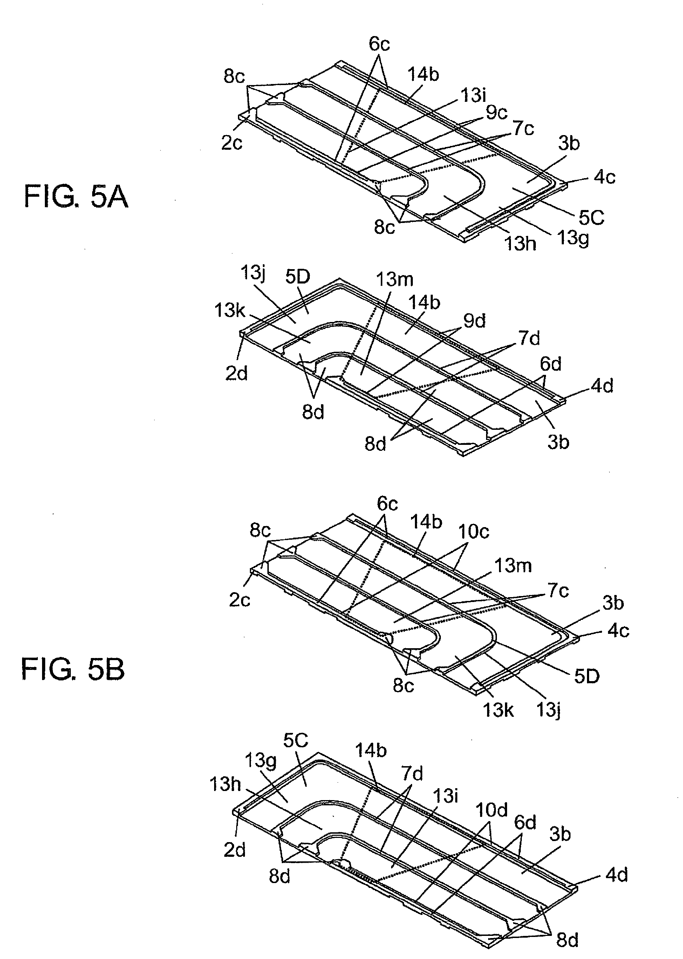

Fig. 4 is a schematic perspective view of a heat exchanging element according to a second embodiment of the present invention. Fig. 5A is a schematic perspective view of one unit element as a component of the heat exchanging element seen in a direction X of Fig. 4. Fig. 5B is a schematic perspective view of one unit element as a component of the heat exchanging element seen in a direction Y of Fig. 4. Like components are labeled with like reference numerals with respect to the first embodiment, and these components are not described again in detail.

As shown in Figs. 4, 5A, and 5B, heat exchanging element 1b according to the second embodiment includes unit elements 4c and unit elements 4d alternately laminated on each other. Each unit element 4c includes heat exchanger plate 3b integrally molded with resin frame 2c. Each unit element 4d includes heat exchanger plate 3b integrally molded with resin frame 2d. Each heat exchanger plate 3b includes air passage 5C on its top surface and air passage 5D on its bottom surface. Heat exchanging element 1b circulates primary airflow "A" through air passage 5C, and secondary airflow "B" through air passage 5D, thereby enabling heat exchange between primary and secondary airflows "A" and "B" via heat exchanger plates 3b.

Unit elements 4c are each formed by integrally molding heat exchanger plate 3b with resin frame 2c including shield portions 6c, flow channel division portions 7c, rectification portions 8c, engagement projections 9c, and engagement recesses 10c. Unit elements 4d are each formed by integrally molding heat exchanger plate 3b with resin frame 2d including shield portions 6d, flow channel division portions 7d, rectification portions 8d, engagement projections 9d, and engagement recesses 10d.

Unit elements 4c and 4d have a picture plane with a long side of 145 mm and a short side of 65 mm in the lamination direction. The alternate lamination of unit elements 4c and unit elements 4d enables heat exchanging element 1b to have inlet ports 11c and outlet ports 12c of primary airflow "A", and inlet ports 11d and outlet ports 12d of secondary airflow "B". Air passage 5C is divided into three flow channels 13g, 13h, and 13i by flow channel division portions 7c. Air passage 5D is divided into three flow channels 13j, 13k, and 13m by flow channel division portions 7d.

Shield portions 6c and 6d are arranged on the top and bottom surfaces, respectively of heat exchanger plate 3b so as to form the outer frames excluding inlet ports 11c, 11d and outlet ports 12c, 12d. The linear portions of shield portions 6c and 6d have a width of 4 mm and a height of 0.75 mm. Flow channel division portions 7c and 7d, which have a width of 1.5 mm and a height of 0.75 mm are arranged on the top and bottom surfaces, respectively, of heat exchanger plate 3b so as to fit each other when unit elements 4a and 4b are laminated.

Rectification portions 8c are integrally formed with flow channel division portions 7c in the vicinity of inlet ports 11c, 11d and outlet ports 12c, 12d so as to form projections projecting into flow channels 13h, 13i, 13k, and 13m. Some of the projections project 3 mm into flow channels 13h, 13k, and some of the projections project 5 mm into flow channels 13i, 13m from flow channel division portions 7c.

The other projections are formed in counterflow regions 14b in such a manner as to project 2 mm into flow channels 13i, 13m from shield portions 6c.

Rectification portions 8d are integrally formed with flow channel division portions 7d in the vicinity of inlet ports 11c, 11d and outlet ports 12c, 12d so as to form projections projecting into flow channels 13h, 13i, 13k, and 13m. Some of the projections project 3 mm into flow channels 13h, 13k, and some of the projections project 5 mm into flow channels 13i, 13m from flow channel division portions 7d.

The other projections are formed in counterflow regions 14b in such a manner as to project 2 mm into flow channels 13i, 13m from shield portions 6d. Rectification portions 8c and 8d fit each other when unit elements 4c and 4d are alternately laminated.

Rectification portions 8c and 8d are formed in the following conditions. The opening area of each of inlet and outlet ports 11c, 12c of flow channel 13g and the opening area of each of inlet and outlet ports 11d, 12d of flow channel 13j which have a flow channel length longer than the average flow channel length are made larger than the average opening area. The opening area of each of inlet and outlet ports 11c, 12c of flow channels 13h, 13i and the opening area of each of inlet and outlet ports 11d, 12d of flow channels 13k, 13m which have flow channel lengths shorter than the average flow channel length are made smaller than the average opening area.

The flow channel lengths in the present embodiments are as follows: flow channels 13g and 13j: 174 mm; flow channels 13h and 13k: 136 mm; and flow channels 13i and 13m: 104 mm. The average flow channel length is 138 mm. The opening areas in the present embodiment are as follows: inlet and outlet ports 11c, 12c of flow channel 13g and inlet and outlet ports 11d, 12d of flow channel 13j: 27 mm²; inlet and outlet ports 11c, 12c of flow channel 13h and inlet and outlet ports 11d, 12d of flow channel 13k: 16.5 mm²; and inlet and outlet ports 11c, 12c of flow channel 13i and inlet and outlet ports 11d, 12d of flow channel 13m: 12 mm². The total opening area of inlet ports 11c, 11d and the total opening area of outlet ports 12c, 12d are both 55.5 mm². The average opening area of inlet ports 11c, 11d and the average opening area of outlet ports 12c, 12d are both 18.5 mm².

Engagement projections 9c and 9d, which have a width of 1.5 mm and a height of 0.4 mm, are arranged on shield portions 6c and 6d, respectively formed on the top surface of each heat exchanger plate 3b. Engagement recesses 10c and 10d, which have a width of 1.6 mm and a depth of 0.5 mm, are arranged on shield portions 6c and 6d, respectively formed on the bottom surface of each heat exchanger plate 3b. When unit elements 4c and 4d are alternately laminated, engagement projections 9c and engagement recesses 10d are engaged with each other, and engagement projections 9d and engagement recesses 10c are engaged with each other.

Heat exchanging element 1b is a counter flow type in which primary and secondary airflows "A" and "B" flow at a right angle or an oblique angle to each other with heat exchanger plates 3b therebetween in the vicinity of inlet ports 11c, 11d and outlet ports 12c, 12d, and flow opposite to each other with heat exchanger plates 3b therebetween in the center. The regions in which primary and secondary airflows "A" and "B" flow opposite to each other with heat exchanger plates 3b therebetween are counterflow regions 14b. In counterflow regions 14b, flow channels 13g, 13h, 13i, 13j, 13k, and 13m, which are divided by shield portions 6c, 6d and flow channel division portions 7c, 7d, have a width of 18 mm.

Resin frames 2c and 2d are formed of a thermoplastic resin such as polystyrene (ABS, AS, or PS), or polyolefin (PP or PE). Heat exchanger plates 3b are cut into a rectangular shape having a long side of 143 mm and a short side of 63 mm. The thickness is 0.2 to 0.01 mm, and preferably 0.1 to 0.01 mm. Heat exchanger plates 3b can be made of Japanese paper, flame retardant paper, or specially-treated paper having heat conductivity, moisture permeability, and a gas shielding property, or can be a moisture-permeable film or a resin sheet or film having only heat conductivity such as polyester, polystyrene (ABS, AS, or PS) or polyolefin (PP or PE).

Heat exchanging element 1b according to the present embodiment has the same production process as heat exchanging element 1a of the first embodiment, and it is described with reference to Fig. 3. The production process of heat exchanging element 1b includes cutting step 15a, molding step 16a, laminating step 17a, and bonding step 18a performed in this order. Cutting step 15a cuts heat exchanger plates 3b into shape. Molding step 16a integrally molds heat exchanger plate 3b with resin frame 2c so as to form unit element 4c, and also integrally molds heat exchanger plate 3b with resin frame 2d so as to form unit element 4d. Laminating step 17a alternately laminates unit elements 4c and unit elements 4d on each other. Bonding step 18a bonds laminated unit elements 4c and 4d.

Cutting step 15a of the present embodiment cuts each heat exchanger plate 3b into a rectangular shape having a long side of 143 mm and a short side of 63 mm.

Molding step 16a inserts heat exchanger plate 3b into an injection mold, injects molten resin into the mold, and solidifies the molten resin so as to form resin frames 2c and 2d. Resin frame 2c is joined to heat exchanger plate 3b, and resin frame 2d is joined to heat exchanger plate 3b so as to form unit elements 4c and 4d.

Laminating step 17a laminates unit elements 4c and unit elements 4d alternately on each other so that engagement projections 9c are engaged with engagement recesses 10d, and engagement projections 9d are engaged with engagement recesses 10c.

Bonding step 18a melts the four corners of unit elements 4c and 4d thus laminated, and parts of the edges of the regions where inlet ports 11c, 11d or outlet ports 12c, 12d are not formed. Bonding step 18a then solidifies the molten resin so as to join unit elements 4c and 4d thus laminated. The resin can be melted by ultrasonic welding.

With the above structure, heat exchanging element 1b allows primary and secondary airflows "A" and "B" to circulate through their corresponding air passages arranged alternately to prevent airflows "A" and "B" from being mixed with each other, thereby enabling heat exchange between primary and secondary airflows "A" and "B" via heat exchanger plates 3b.

Besides rectification portions 8c and 8d, like components are labeled with like reference numerals with respect to the first embodiment, and these components are not described again in detail.

Air passage 5C includes flow channels 13g, 13h, and 13i, and flow channel 13g has the longest flow channel length. Air passage 5D includes flow channels 13j, 13k, and 13m, and flow channel 13j has the longest flow channel length. Flow channels 13g and 13j having the longest flow channel length have a higher ventilation resistance than the other flow channels 13h, 13i, 13k, and 13m. To increase the ventilation resistances of flow channels 13h, 13i, 13k, and 13m, flow channel division portions 7c and 7d are provided with projections as ventilation resistance members projecting into flow channels 13h, 13i, 13k, and 13m in inlet and outlet ports 11c, 12c of flow channels 13h, 13i and in inlet and outlet ports 11d, 12d of flow channels 13k, 13m. These projections function as rectification portions 8c and 8d to reduce the opening area of each of inlet and outlet ports 11c, 12c of flow channels 13h, 13i and the opening area of each of inlet and outlet ports 11d, 12d of flow channels 13k, 13m including rectification portions 8c and 8d, thereby increasing the ventilation resistances. This eliminates drift in air passages 5C and 5D due to different ventilation resistances of flow channels 13g, 13h, 13i, 13j, 13k, and 13m caused by their different flow channel lengths generated by flow channel division portions 7c and 7d, thereby forming a predetermined flow velocity distribution in counterflow regions 14b. This results in providing high heat exchange efficiency.

Furthermore, (not illustrated) arranging some of rectification portions 8c and 8d as the projections in counterflow regions 14d eliminates drift in flow channels 13i and 13m and increases the ventilation resistances of flow channels 13i and 13m. This eliminates drift in air passages 5C and 5D due to different ventilation resistances of flow channels 13g, 13h, 13i, 13j, 13k, and 13m caused by their different flow channel lengths generated by flow channel division portions 7c and 7d. This results in providing high heat exchange efficiency.

Rectification portions 8c and 8d are arranged in inlet ports 11c, 11d, outlet ports 12c, 12d, and counterflow regions 14b in the present embodiment. However, these portions 8c and 8d may alternatively be arranged in either inlet ports 11c and 11d or outlet ports 12c and 12d and counterflow regions 14b, or in either inlet ports 11c and 11d or outlet ports 12c and 12d so as to obtain the same action and effect by changing the size of the opening areas.

In the present embodiment, specific dimensions are given for resin frames 2c and 2d, heat exchanger plates 3b, unit elements 4c and 4d, shield portions 6c and 6d, flow channel division portions 7c and 7d, rectification portions 8c and 8d, engagement projections 9c and 9d, engagement recesses 10c and 10d, inlet ports 11c and 11d, outlet ports 12c and 12d, and flow channels 13g, 13h, 13i, 13j, 13k, and 13m. These dimensions, however, are not limited to those of the present embodiment, and can be properly determined depending on the required performance of heat exchanging element 1b so as to obtain the action and effect equivalent to those of the present embodiment.

### THIRD EMBODIMENT

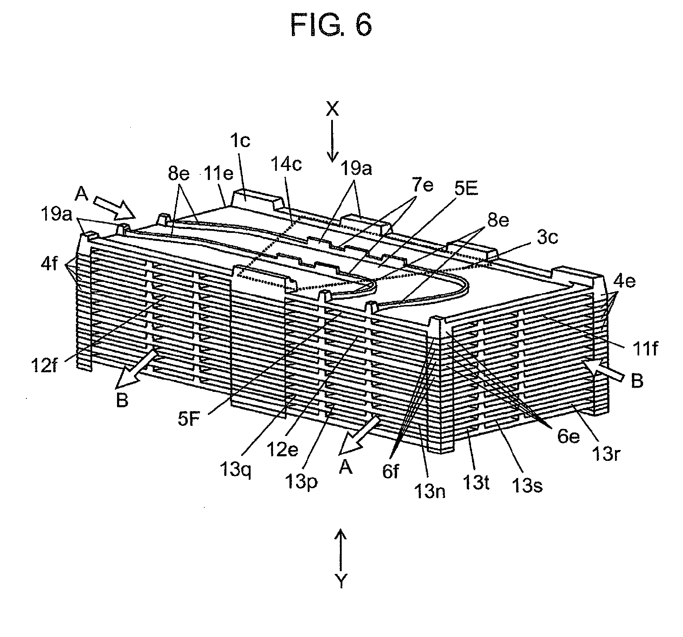

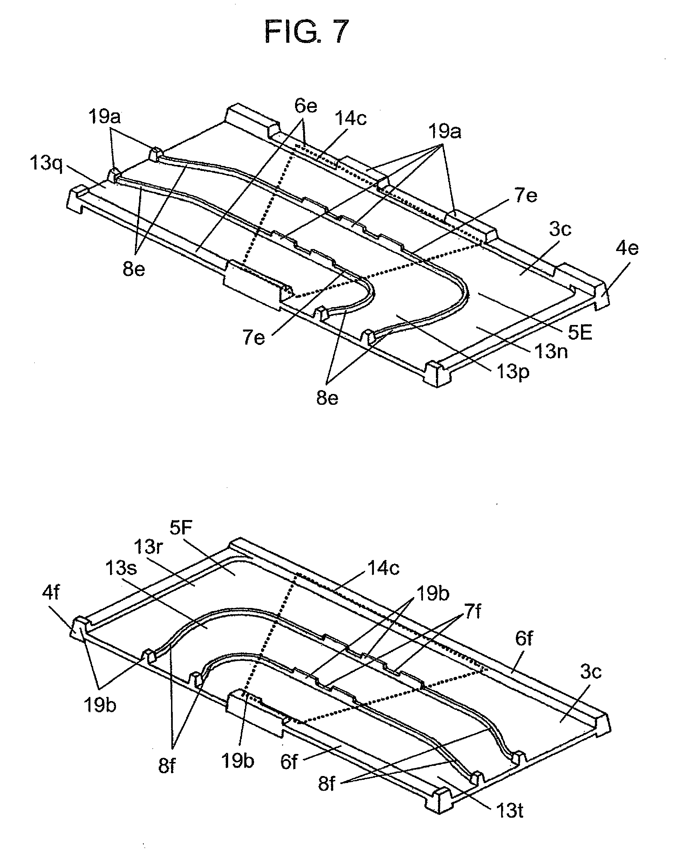

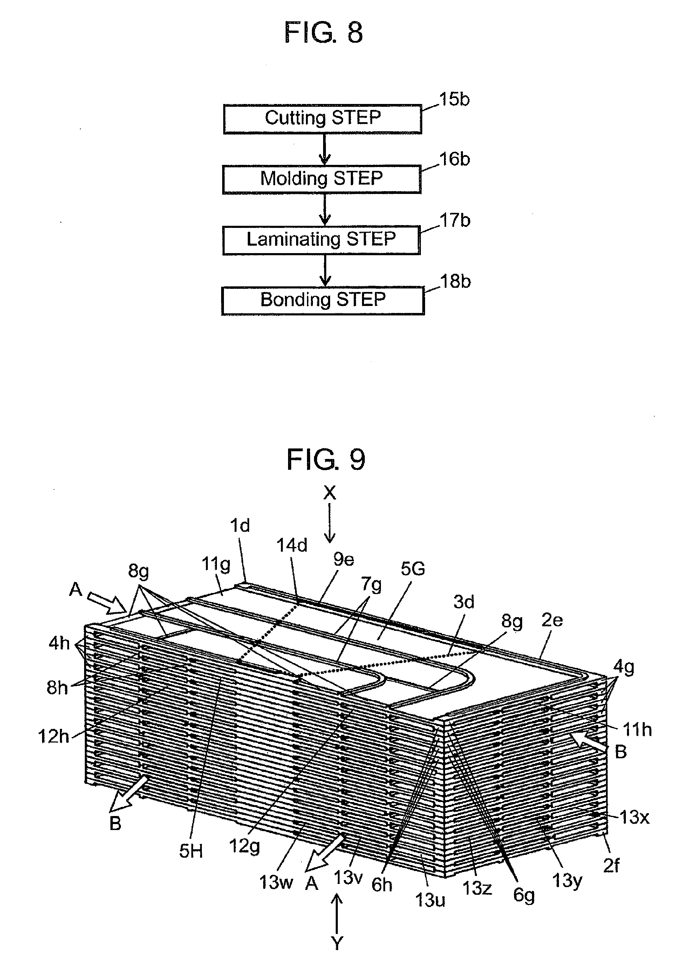

Fig. 6 is a schematic perspective view of a heat exchanging element according to a third embodiment of the present invention. Fig. 7 is a schematic perspective view of one unit element as a component of the heat exchanging element seen in a direction X of Fig. 6. Fig. 8 is a schematic production flowchart of the heat exchanging element. Like components are labeled with like reference numerals with respect to the first and second embodiments, and these components are not described again in detail.

As shown in Figs. 6 and 7, heat exchanging element 1c includes unit elements 4e and unit elements 4f alternately laminated on each other. Each unit element 4e includes shield portions 6e, flow channel division portions 7e, rectification portions 8e, and spaced projections 19a, which are formed by providing an uneven surface structure on heat exchanger plate 3c. Each unit element 4f includes shield portions 6f, flow channel division portions 7f, rectification portions 8f, and spaced projections 19b, which are formed by providing an uneven surface structure on heat exchanger plate 3c. Each heat exchanger plate 3c includes air passage 5E on its top surface and air passage 5F on its bottom surface. Heat exchanging element 1c circulates primary airflow "A" through air passage 5E, and secondary airflow "B" through air passage 5F, thereby enabling heat exchange between primary and secondary airflows "A" and "B" via heat exchanger plates 3c.

Unit elements 4e and 4f have a picture plane having a long side of 145 mm and a short side of 65 mm in the lamination direction after bonded. Unit elements 4e and 4f are formed by vacuum forming a polystyrene sheet having a thickness of, for example, 0.2 mm.

The alternate lamination of unit elements 4e and unit elements 4f enables heat exchanging element 1c to have inlet ports 11e and outlet ports 12e of primary airflow "A" and inlet ports 11f and outlet ports 12f of secondary airflow "B". Air passage 5E is divided into three flow channels 13n, 13p, and 13q by flow channel division portions 7e. Air passage 5F is divided into three flow channels 13r, 13s, and 13t.

Shield portions 6e and 6f are arranged to form the outer frames excluding inlet ports 11e, 11f and outlet port 12e, 12f. The linear portions of shield portions 6e and 6f have a width of 4 mm and a height of 1.5 mm from heat exchanger plate 3c.

Flow channel division portions 7e and 7f are arranged to have a width of 1.5 mm and a height of 1.5 mm from heat exchanger plate 3c.

Rectification portions 8e are integrally formed with flow channel division portions 7e by bending flow channel division portions 7e in the vicinity of inlet and outlet ports 11e, 12e so as to have a width of 1.5 mm and a height of 1.5 mm from heat exchanger plate 3c. Rectification portions 8f are integrally formed with flow channel division portions 7f by bending flow channel division portions 7f in the vicinity of inlet and outlet ports 11f, 12f so as to have a width of 1.5 mm and a height of 1.5 mm from heat exchanger plate 3c.

Rectification portions 8e and 8f are formed by bending flow channel division portions 7e and 7f in the following conditions. The opening area of each of inlet and outlet ports 11e, 12e of flow channel 13n and the opening area of each of inlet and outlet ports 11f, 12f of flow channel 13r which have a flow channel length longer than the average flow channel length are made larger than the average opening area. The opening area of each of inlet and outlet ports 11e, 12e of flow channels 13p, 13q and the opening area of each of inlet and outlet ports 11f, 12f of flow channels 13s, 13t which have flow channel lengths shorter than the average flow channel length are made smaller than the average opening area.

The flow channel lengths in the present embodiment are as follows: flow channels 13n and 13r: 182 mm; flow channels 13p and 13s: 142 mm; and flow channels 13q and 13t: 105 mm. The average flow channel length is 143 mm. The opening areas in the present invention are as follows: inlet ports 11e and 11f respectively of flow channels 13n and 13r: 39 mm²; outlet ports 12e and 12f respectively of flow channels 13n and 13r: 34.5 mm²; inlet ports 11e and 11f respectively of flow channels 13p and 13s: 22.5 mm²; outlet ports 12e and 12f respectively of flow channel 13p and 13s: 24 mm²; inlet ports 11e and 11f respectively of flow channels 13q and 13t: 15 mm², and outlet ports 12e and 12f respectively of flow channels 13q and 13t: 18 mm². The total opening area of inlet ports 11e, 11f and the total opening area of outlet ports 12e, 12f are both 76.5 mm². The average opening area of inlet ports 11e, 11f and the average opening area of outlet port 12e, 12f are both 25.5 mm².

Spaced projections 19a, 19b, which are arranged on shield portions 6e, 6f, flow channel division portions 7e, 7f, and rectification portions 8e, 8f, respectively, play a role in maintaining the spacing between heat exchanger plates 3c when unit elements 4e and 4f are alternately laminated.

Heat exchanging element 1c is a counter flow type in which primary and secondary airflows "A" and "B" flow at a right angle or an oblique angle to each other with heat exchanger plates 3c therebetween in the vicinity of inlet ports 11e, 11f and outlet ports 12e, 12f, and flow opposite to each other with heat exchanger plates 3c therebetween in the center. The regions in which primary and secondary airflows "A" and "B" flow opposite to each other with heat exchanger plates 3c therebetween are referred to as counterflow regions 14c. In counterflow regions 14c, flow channels 13n, 13p, 13q, 13r, 13s, and 13t have a width of 18 mm.

Heat exchanger plates 3c are formed of resin sheets or films of polyester, polystyrene (ABS, AS, or PS), or polyolefin (PP or PE). The thickness is preferably 0.2 to 0.1 mm, and is 0.2 mm in the present embodiment.

As shown in Fig. 8, the production process of heat exchanging element 1c includes cutting step 15b, molding step 16b, laminating step 17b, and bonding step 18b performed in this order. Cutting step 15b cuts heat exchanger plates 3c into shape. Molding step 16b forms an uneven surface structure on heat exchanger plates 3c by a forming method such as vacuum forming, and then cuts unnecessary parts off so as to form unit elements 4e and 4f. Laminating step 17b alternately laminates unit elements 4e and unit elements 4f on each other. Bonding step 18b bonds unit elements 4e and 4f thus laminated.

Molding step 16b forms the uneven surface structure by processing heat exchanger plate 3c of a polystyrene sheet or the like by vacuum forming, and cuts off parts unnecessary to form heat exchanging element 1c so as to form unit elements 4e and 4f. Besides vacuum forming, heat exchanger plate 3c may be formed by air-pressure forming, pressing or the like.

Bonding step 18b melts the edges of laminated unit elements 4e and 4f, and solidifies the molten resin so as to join unit elements 4e and 4f thus laminated.

With the above structure, heat exchanging element 1c allows primary and secondary airflows "A" and "B" to circulate through their corresponding air passages arranged alternately to prevent airflows "A" and "B" from being mixed with each other, thereby enabling heat exchange between primary and secondary airflows "A" and "B" via heat exchanger plates 3c.

Like components are labeled with like reference numerals with respect to the first embodiment, and these components are not described again in detail.

Unit elements 4e and 4f are formed by providing the uneven surface structure on heat exchanger plates 3c, which are formed of a thermoplastic resin such as polystyrene by vacuum forming or the like. Heat exchanger plates 3c, shield portions 6e, 6f, flow channel division portions 7e, 7f, rectification portions 8e, 8f, and spaced projections 19a, 19b are all made of the same material. This prevents peeling between heat exchanger plates 3c and other components, and hence, airflow leakage due to peeling. The integral molding of shield portions 6e, flow channel division portions 7e, rectification portions 8e, and spaced projections 19a, and the integral molding of shield portions 6f, flow channel division portions 7f, rectification portions 8f, and spaced projections 19b provide high-precision spacing between heat exchanger plates 3c in the thickness direction when unit elements 4e and 4f are laminated on each other. This enables the heat exchanging element to maintain its strength, thus preventing bending of heat exchanger plates 3c, which may be caused if the precision in the thickness direction is low while unit elements 4e and 4f are alternately laminated, and also preventing drift in air passages 5E and 5F which may be caused when unit elements 4e and 4f do not have a uniform height. This results in providing high heat exchange efficiency.

In the present embodiment, specific dimensions are given for heat exchanger plates 3c, unit elements 4e and 4f, shield portions 6e and 6f, flow channel division portions 7e and 7f, rectification portions 8e and 8f, inlet ports 11e and 11f, outlet ports 12e and 12f, flow channels 13n, 13p, 13q, 13r, 13s, and 13t, and spaced projections 19a and 19b. These dimensions, however, are not limited to those of the present embodiment, and can be properly determined depending on the required performance of heat exchanging element 1c so as to obtain the action and effect equivalent to those of the present embodiment.

### FOURTH EMBODIMENT

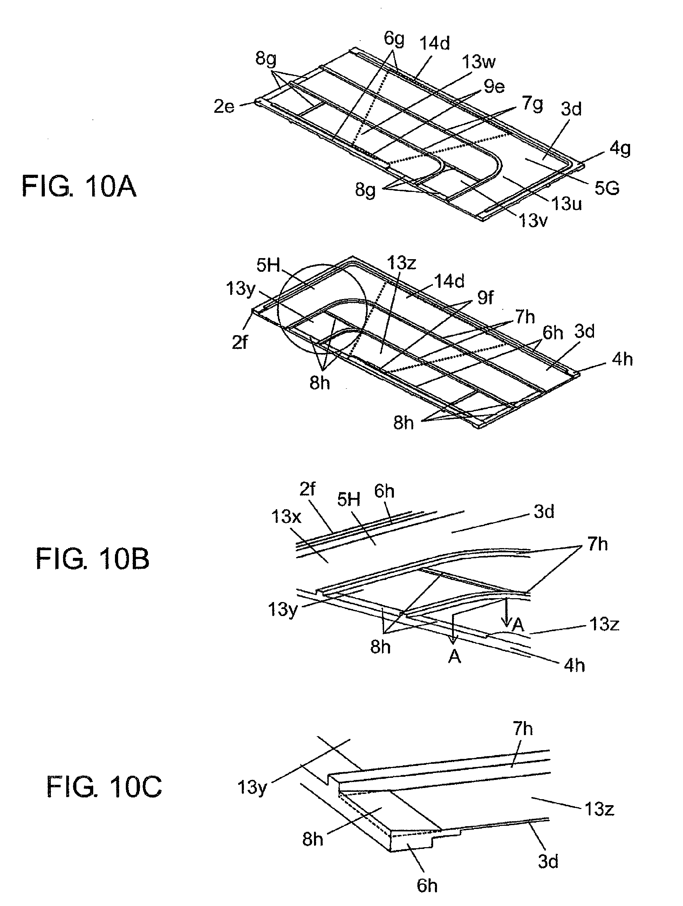

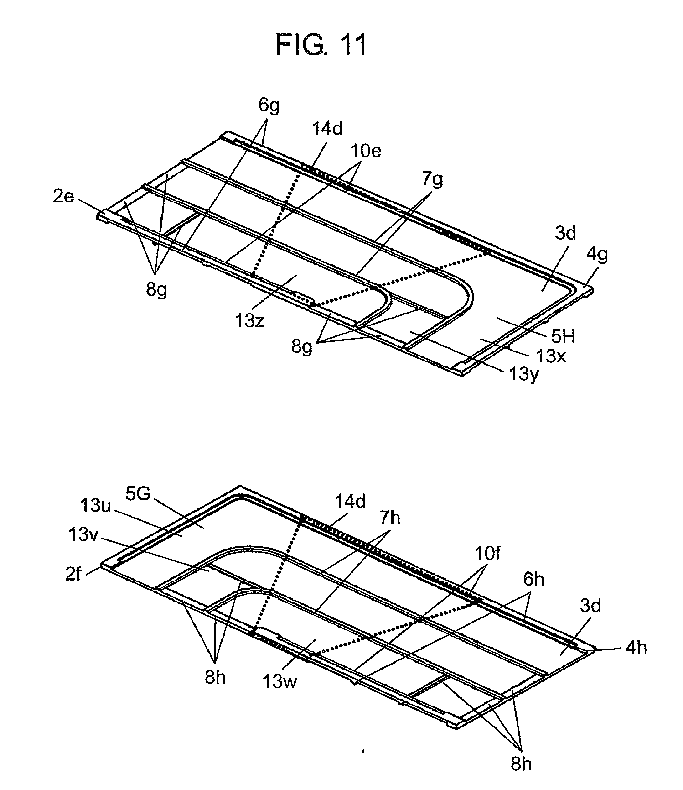

Fig. 9 is a schematic perspective view of a heat exchanging element according to a fourth embodiment of the present invention. Fig. 10A is a schematic perspective view of one unit element as a component of the heat exchanging element seen in a direction X of Fig. 9. Fig. 10B is an enlarged schematic perspective view of one unit element as a component of the heat exchanging element seen in the direction X of Fig. 9. Fig. 10C is an enlarged schematic perspective view of the unit element taken along line A-A of Fig. 10B. Fig. 11 is a schematic perspective view of one unit element as a component of the heat exchanging element seen in a direction Y of Fig. 9. Like components are labeled with like reference numerals with respect to the first to third embodiments, and these components are not described again in detail.

As shown in Figs. 9, 10A, 10B, 10C, and 11, heat exchanging element 1d includes unit elements 4g and unit elements 4h alternately laminated on each other. Each unit element 4g includes heat exchanger plate 3d integrally molded with resin frame 2e. Each unit element 4h includes heat exchanger plate 3d integrally molded with resin frame 2f. Each heat exchanger plate 3d includes air passage 5G on its top surface and air passage 5H on its bottom surface. Heat exchanging element 1d circulates primary airflow "A" through air passage 5G, and secondary airflow "B" through air passage 5H, thereby enabling heat exchange between primary and secondary airflows "A" and "B" via heat exchanger plates 3d.

Unit elements 4g are each formed by integrally molding heat exchanger plate 3d with resin frame 2e including shield portions 6g, flow channel division portions 7g, rectification portions 8g, engagement projections 9e, and engagement recesses 10e. Unit elements 4h are each formed by integrally molding heat exchanger plate 3d with resin frame 2f including shield portions 6h, flow channel division portions 7h, rectification portions 8h, engagement projections 9f, and engagement recesses 10f. Unit elements 4g and 4h have a picture plane having a long side of 145 mm and a short side of 65 mm in the lamination direction.

The alternate lamination of unit elements 4g and unit elements 4h enables heat exchanging element 1d to have inlet ports 11g and outlet ports 12g of primary airflow "A" and inlet ports 11h and outlet ports 12h of secondary airflow "B". Air passage 5G is divided into three flow channels 13u, 13v, and 13w by flow channel division portions 7g. Air passage 5H is divided into three flow channels 13x, 13y, and 13z by flow channel division portions 7h.

Shield portions 6g and 6h are arranged on the top and bottom surfaces, respectively, of heat exchanger plate 3d so as to form the outer frames excluding inlet ports 11g, 11h and outlet ports 12g, 12h. The linear portions of shield portions 6g and 6h have a width of 4 mm and a height of 0.75 mm.

Flow channel division portions 7g and 7h, which have a width of 1.5 mm and a height of 0.75 mm, are arranged on the top and bottom surfaces, respectively, of heat exchanger plate 3d so as to fit each other when unit elements 4g and 4h are laminated. Rectification portions 8g include portions that are integrated with shield portions 6g in the vicinity of inlet ports 11g, 11h and outlet ports 12g, 12h, and portions that are formed between one side surface of heat exchanger plate 3d and the reverse side of flow channel division portions 7g.

Of rectification portions 8g, the portions that are integrated with shield portions 6g in the vicinity of inlet ports 11g, 11h and outlet ports 12g, 12h form projections projecting into flow channels 13v, 13w, 13y, and 13z. The projections projecting into flow channels 13v and 13y are inclined with respect to shield portions 6g by 0.3 mm on the opening side and by 0 mm on the inner side. The projections projecting into flow channels 13w and 13z are inclined with respect to shield portions 6g by 0.15 mm on the opening side and by 0 mm on the inner side.

Of rectification portions 8g, the portions that are formed between the flow-channel (13v, 13w, 13y, or 13z) side surface of heat exchanger plate 3d and the reverse side of flow channel division portions 7g form projections projecting 0.15 mm. The "opening side" indicates the side of inlet port 11g or 11h or the side of outlet ports 12g or 12h as seen from inside heat exchanging element 1d. The "inner side" indicates inside heat exchanging element 1d as seen from inlet port 11g or 11h or outlet ports 12g and 12h.

Rectification portions 8h include portions that are integrated with shield portions 6h in the vicinity of inlet ports 11g, 11h and outlet ports 12g, 12h, and portions that are formed between one side surface of heat exchanger plate 3d and the reverse side of flow channel division portions 7h. Of rectification portions 8h, the portions that are integrated with shield portions 6h in the vicinity of inlet ports 11g, 11h and outlet ports 12g, 12h form projections projecting into flow channels 13v, 13w, 13y, and 13z. The projections projecting into flow channels 13v and 13y are inclined with respect to shield portions 6h by 0.3 mm on the opening side and by 0 mm on the inner side. The projections projecting into flow channels 13w and 13z are inclined with respect to shield portions 6h by 0.15 mm on the opening side and by 0 mm on the inner side. Of rectification portions 8h, the portions that are formed between the flow-channel (13v, 13w, 13y, or 13z) side surface of heat exchanger plate 3d and the reverse side of flow channel division portions 7h form projections projecting 0.15 mm.

Rectification portions 8g and 8h are formed in the following conditions. The opening area of each of inlet and outlet ports 11g, 12g of flow channels 13v, 13w and the opening area of each of inlet and outlet ports 11h, 12h of flow channels 13y, 13z are made smaller than the opening area of each of inlet and outlet ports 11g, 12g of flow channel 13u and the opening area of each of inlet and outlet ports 11h, 12h of flow channel 13x which have the longest flow channel length. The flow channel lengths in the present embodiment are as follows: flow channels 13u and 13x: 180 mm; flow channels 13v and 13y: 140 mm; and flow channels 13w and 13z: 104 mm. The average flow channel length is 141.3 mm. The opening areas in the present embodiment are as follows: inlet and outlet ports 11g, 12g of flow channel 13u and inlet and outlet ports 11h, 12h of flow channel 13x: 27 mm²; inlet and outlet ports 11g, 12g of flow channel 13v and inlet and outlet ports 11h, 12h of flow channel 13y: 21.6 mm²; and inlet and outlet ports 11g, 12g of flow channel 13w and inlet and outlet ports 11h, 12h of flow channel 13z: 16.2 mm².

Engagement projections 9e and 9f, which have a width of 1.5 mm and a height of 0.4 mm, are arranged on shield portions 6g and 6h, respectively formed on the top surface of each heat exchanger plate 3d. Engagement recesses 10e and 10f, which have a width of 1.6 mm and a depth of 0.5 mm, are arranged on shield portions 6g and 6h, respectively formed on the bottom surface of each heat exchanger plate 3d. When unit elements 4g and 4h are alternately laminated, engagement projections 9e and engagement recesses 10f are engaged with each other, and engagement projections 9f and engagement recesses 10e are engaged with each other.

Heat exchanging element 1d is a counter flow type in which primary and secondary airflows "A" and "B" flow at a right angle or an oblique angle to each other with heat exchanger plates 3d therebetween in the vicinity of inlet ports 11g, 11h and outlet ports 12g, 12h, and flow opposite to each other with heat exchanger plates 3d therebetween in the center. The regions in which primary and secondary airflows "A" and "B" flow opposite to each other with heat exchanger plates 3d therebetween are referred to as counterflow regions 14d. In counterflow regions 14d, flow channels 13u, 13v, 13w, 13x, 13y, and 13z, which are divided by shield portions 6g, 6h and flow channel division portions 7g, 7h, have a width of 18 mm.

Resin frames 2e and 2f are formed of a thermoplastic resin such as polystyrene (ABS, AS, or PS) or polyolefin (PP or PE). Heat exchanger plates 3d are cut into a rectangular shape having a long side of 143 mm and a short side of 63 mm. The thickness is 0.2 to 0.01 mm, and preferably 0.1 to 0.01 mm. Heat exchanger plates 3d can be made of Japanese paper, flame retardant paper, or specially-treated paper having heat conductivity, moisture permeability, and a gas shielding property, or can be a moisture-permeable film or a resin sheet or film having only heat conductivity such as polyester, polystyrene (ABS, AS, or PS), or polyolefin (PP or PE).

Heat exchanging element 1d according to the present embodiment has the same production process as heat exchanging element 1a of the first embodiment, and it is described with reference to Fig. 3. The production process of heat exchanging element 1d includes cutting step 15a, molding step 16a, laminating step 17a, and bonding step 18a performed in this order. Cutting step 15a cuts heat exchanger plates 3d into shape. Molding step 16a integrally molds heat exchanger plate 3d with resin frame 2e so as to form unit element 4g, and also integrally molds heat exchanger plate 3d with resin frame 2f so as to form unit element 4h. Laminating step 17a alternately laminates unit elements 4g and unit elements 4h on each other. Bonding step 18a bonds laminated unit elements 4g and 4h.

Cutting step 15a of the present embodiment cuts each heat exchanger plate 3d into a rectangular shape having a long side of 143 mm and a short side of 63 mm.

Molding step 16a inserts heat exchanger plate 3d into an injection mold, injects molten resin into the mold, and solidifies the molten resin so as to form resin frames 2e and 2f. Resin frame 2e is joined to heat exchanger plate 3d, and resin frame 2f is joined to heat exchanger plate 3d so as to form unit elements 4g and 4h.

Laminating step 17a laminates unit elements 4g and unit elements 4h alternately on each other so that engagement projections 9e are engaged with engagement recesses 10f, and engagement projections 9f are engaged with engagement recesses 10e.

Bonding step 18a melts the four corners of unit elements 4g and 4h thus laminated, and parts of the edges of the regions where inlet ports 11g, 11h or outlet ports 12g, 12h are not formed. Bonding step 18a then solidifies the molten resin so as to join unit elements 4g and 4h thus laminated. The resin can be melted by ultrasonic welding.

With the above structure, heat exchanging element 1d allows primary and secondary airflows "A" and "B" to circulate through their corresponding air passages arranged alternately to prevent airflows "A" and "B" from being mixed with each other, thereby enabling heat exchange between primary and secondary airflows "A" and "B" via heat exchanger plates 3d.

Besides rectification portions 8g and 8h, like components are labeled with like reference numerals with respect to the first embodiment, and these components are not described again in detail.

Air passage 5G includes flow channels 13u, 13v, and 13w, and flow channel 13u has the longest flow channel length. Air passage 5H includes flow channels 13x, 13y, and 13z, and flow channel 13x has the longest flow channel length. If rectification portions 8g and 8h are not provided, flow channels 13u and 13x having the longest flow channel length have a higher ventilation resistance than the other flow channels 13v, 13w, 13y, and 13z. To increase the ventilation resistances of flow channels 13v, 13w, 13y, and 13z, shield portions 6g and 6h are provided with projections as ventilation resistance members projecting into flow channels 13v, 13w, 13y, and 13z in inlet and outlet ports 11g, 12g of flow channels 13v, 13w and in inlet and outlet ports 11h, 12h of flow channels 13y, 13z. These projections function as rectification portions 8g and 8h to reduce the opening area of each of inlet and outlet ports 11g, 12g of flow channels 13v, 13w and the opening area of each of inlet and outlet ports 11h, 12h of flow channels 13y, 13z including rectification portions 8g and 8h, thereby increasing the ventilation resistances.

This eliminates drift in air passages 5G and 5H due to different ventilation resistances of flow channels 13u, 13v, 13w, 13x, 13y, and 13z caused by their different flow channel lengths generated by flow channel division portions 7g and 7h, thereby forming a predetermined flow velocity distribution in counterflow regions 14d. This results in providing high heat exchange efficiency. As described above, the portions that are formed between the flow-channel (13v, 13w, 13y, or 13z) side surface of heat exchanger plate 3d and the reverse side of flow channel division portions 7g, 7h form projections as ventilation resistance members, which function as rectification portions 8g, 8h. This increases the ventilation resistances of flow channels 13v, 13w, 13y, and 13z including rectification portions 8g and 8h. As a result, this eliminates drift in air passages 5G and 5H due to different ventilation resistances of flow channels 13u, 13v, 13w, 13x, 13y, and 13z caused by their different flow channel lengths generated by flow channel division portions 7g and 7h, thereby forming a predetermined flow velocity distribution in counterflow regions 14d. This results in providing high heat exchange efficiency. Rectification portions 8g and 8h are arranged in inlet ports 11g and 11h, outlet ports 12g and 12h, and in some portions between one side surface of heat exchanger plate 3d and the reverse side of flow channel division portions 7g or 7h in the present embodiment. However, these portions 8g and 8h may alternatively be arranged in either inlet ports 11g and 11h or outlet ports 12g and 12h, and in some portions between one side surface of heat exchanger plate 3d and the reverse side of flow channel division portions 7g or 7h; only in inlet ports 11g, 11h and outlet port 12g, 12h; or only in some portions between one side surface of heat exchanger plate 3d and the reverse side of flow channel division portions 7g or 7h. In all of these cases, the same action and effect can be obtained by changing the size of the opening areas.

In the present embodiment, specific dimensions are given for resin frames 2e and 2f, heat exchanger plates 3d, unit elements 4g and 4h, shield portions 6g and 6h, flow channel division portions 7g and 7h, rectification portions 8g and 8h, engagement projections 9e and 9f, engagement recesses 10e and 10f, inlet ports 11g and 11h, outlet ports 12g and 12h, and flow channels 13u, 13v, 13w, 13x, 13y, and 13z. These dimensions, however, are not limited to those of the present embodiment, and can be properly determined depending on the required performance of heat exchanging element 1d so as to obtain the action and effect equivalent to those of the present embodiment.

### INDUSTRIAL APPLICABILITY

The lamination type heat exchanging element of the present invention, which is for use in heat exchange type ventilation fans for domestic use, in heat exchange type ventilators for buildings or other structures, and in other air conditioning devices, provides high industrial applicability.

## Claims

1. A heat exchanging element for performing heat exchange by circulating a primary airflow and a secondary airflow through corresponding air passages (5) alternately formed between a plurality of heat exchanger plates (3) laminated on each other with a predetermined spacing, the heat exchanging element (1) comprising:
counterflow regions (14) in which the primary airflow and the secondary airflow flow opposite to each other with the heat exchanger plates (3) therebetween;
shield portions(6) for preventing airflow leakage from regions other than inlet ports (11) and outlet ports (12) of the primary airflow and the secondary airflow in the air passages (5);
flow channel division portions (7) for dividing each of the air passages (5) into a plurality of flow channels (13), the flow channels (13) divided by the flow channel division portions (7) having different flow channel lengths from each other; and
rectification portions (8) arranged in the air passages (5), the rectification portions (8) providing a predetermined flow velocity distribution of the primary airflow and the secondary airflow circulating through the counterflow regions (14) in the flow channels (13) divided by the flow channel division portions (7), **characterized in that** the rectification portions (8) are ventilation resistance members shaped to increase ventilation resistances of flow channels (13) other than the longest flow channel (13) having the longest flow channel length of all the flow channels (13) divided by the flow channel division portions (7), wherein
the rectification portions (8) are partially or wholly located in at least one of inlet ports (11) and outlet ports (12) of the flow channels (13) other than the longest flow channel (13) so that at least one of an opening area of each of the inlet ports (11) and an opening area of each of the outlet ports (12) of the flow channels (13) other than the longest flow channel (13) can be smaller than an opening area of an inlet port (11) and an opening area of an outlet port (12), respectively, of the longest flow channel (13).

2. The heat exchanging element of claim 1, wherein
the rectification portions (8) are located in the air passages (5) other than the counterflow regions (14).

3. The heat exchanging element of one of claims 1 and 2, wherein
the rectification portions (8) are shaped to decrease ventilation resistances of flow channels (13) having flow channel lengths longer than an average flow channel length of the flow channels (13) divided by the flow channel division portions (7) and to increase ventilation resistances of flow channels (13) having flow channel lengths shorter than the average flow channel length.

4. The heat exchanging element of claim 3, wherein
the rectification portions (8) are partially or wholly located in the inlet ports (11) of the flow channels (13) so that an opening area of each of the inlet ports (11) of the flow channels (13) having longer flow channel lengths than the average flow channel length can be larger than an average opening area of the inlet ports (11), and that an opening area of each of the inlet ports (11) of the flow channels (13) having shorter flow channel lengths than the average flow channel length can be smaller than the average opening area of the inlet ports (11).

5. The heat exchanging element of claim 3, wherein
the rectification portions (8) are partially or wholly located in the outlet ports (12) of the flow channels (13) so that an opening area of each of the outlet ports (12) of the flow channels (13) having longer flow channel lengths than the average flow channel length can be larger than an average opening area of the outlet ports (12), and that an opening area of each of the outlet ports (12) of the flow channels (13) having shorter flow channel lengths than the average flow channel length can be smaller than the average opening area of the outlet ports (12).

6. The heat exchanging element of claim 3, wherein
the rectification portions (8) are partially or wholly located in the inlet ports (11) and the outlet ports (12) of the flow channels (13) so that an opening area of each of the inlet ports (11) and an opening area of each of the outlet ports (12) of the flow channels (13) having longer flow channel lengths than the average flow channel length can be larger than an average opening area of the inlet ports (11) and an average opening area of the outlet ports (12), respectively, and that an opening area of each of the inlet ports (11) and an opening area of each of the outlet ports (12) of the flow channels (13) having shorter flow channel lengths than the average flow channel length can be smaller than the average opening area of the inlet ports (11) and the average opening area of the outlet ports (12), respectively.

7. The heat exchanging element of claim 1, wherein
the flow channel division portions (7) are partially integrated with the rectification portions (8), and
the rectification portions (8) are formed by bending parts of the flow channel division portions (7) in such a manner that an opening area of flow channels (13) having longer flow channel lengths than an average flow channel length of the flow channels (13) divided by the flow channel division portions (7) can be larger than an average opening areas, and that an opening area of flow channels (13) having shorter flow channel lengths than the average flow channel length can be smaller than the average opening area.

8. The heat exchanging element of claim 1, wherein
the rectification portions (8) that increase ventilation resistances of the flow channels (13) divided by the flow channel division portions (7) are integrally formed with the flow channel division portions (7), the rectification portions (8) being formed as projections on surfaces of the flow channel division portions (7) that are in contact with the flow channels (13).

9. The heat exchanging element of claim 1, wherein
the rectification portions (8) that increase ventilation resistances of the flow channels (13) divided by the flow channel division portions (7) are integrally formed with the shield portions (6), the rectification portions (8) being formed as projections on some or all surfaces of the shield portions (6) that are in contact with opening sections of the flow channels (13).

10. The heat exchanging element of one of claims 8 and 9, wherein
the projections are high on an opening side and low on an inner side.

11. The heat exchanging element of claim 1, wherein
the rectification portions (8) that increase ventilation resistances of the flow channels (13) divided by the flow channel division portions (7) are formed as projections on the heat exchanger plates (3).

12. The heat exchanging element of claim 11, wherein
the projections are formed between one side surface of the heat exchanger plates (3) and a reverse side of the flow channel division portions (7).

13. The heat exchanging element of any one of claims 1, 2, 7, 8, 9, and 11, wherein the heat exchanger plates (3) are integrally molded with resin frames (2) using an injection molding process so as to form a plurality of unit elements (4), the heat exchanger plates (3) being made of paper or resin and having heat conductivity, moisture permeability, and a gas shielding property, the resin frames (2) being made of synthetic resin and forming the air passages (5) including the shield portions (6), the flow channel division portions (7), and the rectification portions (8), and the plurality of unit elements (4) being laminated on each other.

14. The heat exchanging element of any one of claims 1, 2, 7, 8, 9, and 11, wherein the heat exchanger plates (3) made of thermoplastic resin are each provided with an uneven surface structure so as to form the shield portions (6), the flow channel division portions (7), and the rectification portions (8) thereon so as to form the unit elements (4), the unit elements (4) being laminated on each other.

15. The heat exchanging element of any one of claims 1, 2, 7, 8, 9, and 11, wherein the primary airflow and the secondary airflow circulating the flow channels (13) divided by the flow channel division portions (7) are subjected to heat exchange in order of being at a right angle or an oblique angle to each other, being opposite to each other, and being at a right angle or an oblique angle to each other with the heat exchanger plates (3) therebetween.

16. The heat exchanging element of any one of claims 1, 2, 7, 8, 9, and 11, wherein the heat exchanging element (1) has a rectangular picture plane in a lamination direction, inlet ports (11) of the primary airflow on a short side, inlet ports (11) of the secondary airflow on the other short side, and outlet ports (12) of the primary airflow and outlet ports (12) of the secondary airflow on a long side.

## Patentansprüche

1. Wärmetauscherelement zum Ausführen eines Wärmeaustauschs durch Umwälzen eines primären Luftstromes und eines zweiten Luftstromes durch entsprechende Luftdurchlässe (5), die abwechselnd zwischen mehreren Wärmetauscherplatten (3), die mit einem vorgegebenen Abstand geschichtet sind, gebildet sind, wobei das Wärmetauscherelement (1) umfasst:
Gegenstrombereiche (14), in denen der primäre Luftstrom und der sekundäre Luftstrom entgegengesetzt zueinander mit den Wärmetauscherplatten (3) dazwischen strömen;
Abschirmabschnitte (6), um ein Luftstromentweichen des primären Luftstromes und des sekundären Luftstromes in den Luftdurchlässen (5) von anderen Bereichen als den Eintrittsöffnungen und den Austrittsöffnungen zu verhindern;
Strömungskanalunterteilungsabschnitte (7), um jeden der Luftdurchlässe (5) in mehrere Strömungskanäle (13) zu unterteilen, wobei die durch die Strömungskanalunterteilungsabschnitte (7) unterteilten Strömungskanäle (13) voneinander verschiedene Strömungskanallängen besitzen; und
Rektifikationsabschnitte (8), die in den Luftdurchlässen (5) angeordnet sind, wobei die Rektifikationsabschnitte (8) eine vorgegebene Strömungsgeschwindigkeitsverteilung des primären Luftstromes und des sekundären Luftstromes, die durch die Gegenstrombereiche (14) in den durch die Strömungskanalunterteilungsabschnitte (7) unterteilten Strömungskanälen (13) umgewälzt werden, liefern, **dadurch gekennzeichnet, dass** die Rektifikationsabschnitte (8) Lüftungswiderstandselemente sind, die so geformt sind, dass sie die Lüftungswiderstände von den Strömungskanälen (13) mit Ausnahme des längsten Strömungskanals (13), der die längste Strömungskanallänge von allen durch die Strömungskanalunterteilungsabschnitte (7) unterteilten Strömungskanälen (13) besitzt, erhöhen, wobei
sich die Rektifikationsabschnitte (8) teilweise oder vollständig in mindestens einer der Eintrittsöffnungen (11) und der Austrittsöffnungen (12) der Strömungskanäle (13) außer dem längsten Strömungskanal (13) befinden, so dass mindestens einer eines Öffnungsbereichs von jeder der Eintrittsöffnungen (11) und eines Öffnungsbereichs von jeder der Austrittsöffnungen (12) der Strömungskanäle (13) mit Ausnahme des längsten Strömungskanals (13) jeweils kleiner als ein Öffnungsbereich einer Eintrittsöffnung (11) und ein Öffnungsbereich einer Austrittsöffnung (12) des längsten Strömungskanals (13) sein kann.

2. Wärmetauscherelement nach Anspruch 1, wobei
sich die Rektifikationsabschnitte (8) in den Luftdurchlässen (5) außer in den Gegenstrombereichen (14) befinden.

3. Wärmetauscherelement nach einem der Ansprüche 1 und 2, wobei
die Rektifikationsabschnitte (8) so geformt sind, dass sie die Lüftungswiderstände der Strömungskanäle (13), die Strömungskanallängen aufweisen, die länger als eine Durchschnittsströmungskanallänge der durch die Strömungskanalunterteilungsabschnitte (7) unterteilten Strömungskanäle (13) ist, verringern und die Lüftungswiderstände der Strömungskanäle (13), die Strömungskanallängen aufweisen, die kürzer als die Durchschnittsströmungskanallänge ist, erhöhen.

4. Wärmetauscherelement nach Anspruch 3, wobei
sich die Rektifikationsabschnitte (8) teilweise oder vollständig in den Eintrittsöffnungen (11) der Strömungskanäle (13) befinden, so dass ein Öffnungsbereich von jeder der Eintrittsöffnungen (11) der Strömungskanäle (13), die eine größere Strömungskanallänge als die Durchschnittsströmungskanallänge aufweisen, größer als ein Durchschnittsöffnungsbereich der Eintrittsöffnungen (11) sein kann und dass ein Öffnungsbereich von jeder der Eintrittsöffnungen (11) der Strömungskanäle (13), die kleinere Strömungskanallängen als die Durchschnittsströmungskanallänge aufweisen, kleiner als der Durchschnittsöffnungsbereich der Eintrittsöffnungen (11) sein kann.

5. Wärmetauscherelement nach Anspruch 3, wobei
sich die Rektifikationsabschnitte (8) teilweise oder vollständig in den Austrittsöffnungen (12) der Strömungskanäle (13) befinden, so dass ein Öffnungsbereich von jeder der Austrittsöffnungen (12) der Strömungskanäle (13), die eine größere Strömungskanallänge als die Durchschnittsströmungskanallänge aufweisen, größer als ein Durchschnittsöffnungsbereich der Austrittsöffnungen (12) sein kann und dass ein Öffnungsbereich von jeder der Austrittsöffnungen (12) der Strömungskanäle (13), die kleinere Strömungskanallängen als die Durchschnittsströmungskanallänge aufweisen, kleiner als der Durchschnittsöffnungsbereich der Austrittsöffnungen (12) sein kann.

6. Wärmetauscherelement nach Anspruch 3, wobei
sich die Rektifikationsabschnitte (8) teilweise oder vollständig in den Eintrittsöffnungen (11) und den Austrittsöffnungen (12) der Strömungskanäle (13) befinden, so dass ein Öffnungsbereich von jeder der Eintrittsöffnungen (11) und ein Öffnungsbereich von jeder der Austrittsöffnungen (12) der Strömungskanäle (13), die eine größere Strömungskanallänge als die Durchschnittsströmungskanallänge aufweisen, jeweils größer als ein Durchschnittsöffnungsbereich der Eintrittsöffnungen (11) und ein Durchschnittsöffnungsbereich der Austrittsöffnungen (12) sein kann und dass ein Öffnungsbereich von jeder der Eintrittsöffnungen (11) und ein Öffnungsbereich von jeder der Austrittsöffnungen (12) der Strömungskanäle (13), die kleinere Strömungskanallängen als die Durchschnittsströmungskanallänge aufweisen, jeweils kleiner als der Durchschnittsöffnungsbereich der Eintrittsöffnungen (11) und der Durchschnittsöffnungsbereich der Austrittsöffnungen (12) sein kann.

7. Wärmetauscherelement nach Anspruch 1, wobei
die Strömungskanalunterteilungsabschnitte (7) teilweise mit den Rektifikationsabschnitten (8) integriert sind und
die Rektifikationsabschnitte (8) durch sich krümmende Teile der Strömungskanalunterteilungsabschnitte (7) in der Weise gebildet sind, dass ein Öffnungsbereich der Strömungskanäle (13), die größere Strömungskanallängen als eine Durchschnittsströmungskanallänge der durch die Strömungskanalunterteilungsabschnitte (7) unterteilten Strömungskanäle (13) aufweisen, größer als ein Durchschnittsöffnungsbereich sein kann und dass ein Öffnungsbereich der Strömungskanäle (13), die kleinere Strömungskanallängen als die Durchschnittsströmungskanallänge aufweisen, kleiner als der Durchschnittsöffnungsbereich sein kann.

8. Wärmetauscherelement nach Anspruch 1, wobei
die Rektifikationsabschnitte (8), die die Lüftungswiderstände der durch die Strömungskanalunterteilungsabschnitte (7) unterteilten Strömungskanäle (13) erhöhen, aus einem Stück mit den Strömungskanalunterteilungsabschnitten (7) gebildet sind, wobei die Rektifikationsabschnitte (8) als Vorsprünge auf Flächen der Strömungskanalunterteilungsabschnitte (7), die mit den Strömungskanälen (13) in Berührung sind, gebildet sind.

9. Wärmetauscherelement nach Anspruch 1, wobei
die Rektifikationsabschnitte (8), die die Lüftungswiderstände der durch die Strömungskanalunterteilungsabschnitte (7) unterteilten Strömungskanäle (13) erhöhen, aus einem Stück mit den Abschirmabschnitten (6) gebildet sind, wobei die Rektifikationsabschnitte (8) als Vorsprünge auf einigen oder allen Flächen der Abschirmabschnitte (7), die mit den Öffnungsabschnitten der Strömungskanäle (13) in Berührung sind, gebildet sind.

10. Wärmetauscherelement nach einem der Ansprüche 8 und 9, wobei die Vorsprünge auf einer Öffnungsseite hoch und auf einer inneren Seite niedrig sind.

11. Wärmetauscherelement nach Anspruch 1, wobei
die Rektifikationsabschnitte (8), die die Lüftungswiderstände der durch die Strömungskanalunterteilungsabschnitte (7) unterteilten Strömungskanäle (13) erhöhen, als Vorsprünge auf den Wärmetauscherplatten (3) gebildet sind.

12. Wärmetauscherelement nach Anspruch 11, wobei
die Vorsprünge zwischen einer Seitenfläche der Wärmetauscherplatten (3) und einer Rückseite der Strömungskanalunterteilungsabschnitte (7) gebildet sind.

13. Wärmetauscherelement nach einem der Ansprüche 1, 2, 7, 8, 9, und 11, wobei
die Wärmetauscherplatten (3) unter Verwendung eines Spritzgießverfahrens auf Harzrahmen (2) aufgepresst sind, um mehrere Einheitselemente (4) zu bilden, wobei die Wärmetauscherplatten (3) aus Papier oder Harz hergestellt sind und Wärmeleit-, Feuchtigkeitsdurchlässigkeits- und Gasabschirmungseigenschaften aufweisen, wobei die Harzrahmen (2) aus synthetischem Harz hergestellt sind und die Luftdurchlässe (5), die die Abschirmabschnitte (6) bilden, wobei die Strömungskanalunterteilungsabschnitte (7) und die Rektifikationsabschnitte (8) und die mehreren Einheitselemente (4) aufeinander geschichtet sind.

14. Wärmetauscherelement nach einem der Ansprüche 1, 2, 7, 8, 9 und 11, wobei
die Wärmetauscherplatten (3), die aus einem thermoplastischen Harz hergestellt sind, jede mit einer unebenen Oberflächenstruktur versehen ist, um die Abschirmabschnitte (6), mit
den Strömungskanalunterteilungsabschnitten (7) und den Rektifikationsabschnitten (8) darauf zu bilden, um die Einheitselemente (4) zu bilden, wobei die Einheitselemente (4) aufeinander geschichtet sind.

15. Wärmetauscherelement nach einem der Ansprüche 1, 2, 7, 8, 9 und 11, wobei
der primäre Luftstrom und der sekundäre Luftstrom, die durch die durch die Strömungskanalunterteilungsabschnitte (7) unterteilten Strömungskanäle umgewälzt werden, einem Wärmeaustausch ausgesetzt werden, um in einem rechten Winkel oder einem schiefen Winkel zueinander zu sein, entgegensetzt zueinander zu sein und in einem rechten Winkel oder einem schiefen Winkel zueinander mit den Wärmetauscherplatten (3) dazwischen zu sein.

16. Wärmetauscherelement nach einem der Ansprüche 1, 2, 7, 8, 9 und 11, wobei
das Wärmetauscherelement (1) eine rechtwinklige Bildebene in einer Schichtungsrichtung aufweist, mit den Eintrittsöffnungen (11) des primären Luftstromes auf einer kurzen Seite, den Eintrittsöffnungen (11) des sekundären Luftstromes auf der anderen kurzen Seite und Austrittsöffnungen (12) des primären Luftstromes und Austrittsöffnungen (12) des sekundären Luftstromes auf einer langen Seite.

## Revendications

1. Elément d'échange de chaleur pour mettre en oeuvre un échange de chaleur en faisant circuler un flux d'air primaire et un flux d'air secondaire à travers des passages d'air (5) correspondants formés en alternance entre plusieurs plaques d'échangeur de chaleur (3) disposées en lames avec un espacement prédéterminé, l'élément d'échange de chaleur (1) comprenant :
des régions de contre-courant (14) dans lesquelles le flux d'air primaire et le flux d'air secondaire circulent à contre-courant l'un de l'autre de chaque côté des plaques d'échangeur de chaleur (3) ;
des parties écran (6) pour empêcher un flux d'air de s'échapper par des régions autres que les ouvertures d'entrée (11) et les ouvertures de sortie (12) du flux d'air primaire et du flux d'air secondaire dans les passages d'air (5) ;
des parties de division en canaux d'écoulement (7) pour diviser chacun des passages d'air (5) en une pluralité de canaux d'écoulement (13), les canaux d'écoulement (13) séparés par les parties de division en canaux d'écoulement (7) ayant des longueurs de canaux d'écoulement différentes ; et
des parties de rectification (8) disposées dans les passages d'air (5), les parties de rectification (8) permettant une distribution prédéterminée de la vitesse de flux du flux d'air primaire et du flux d'air secondaire circulant à travers les régions de contre-courant (14) dans les canaux d'écoulement (13) séparés par les parties de division en canaux d'écoulement (7), **caractérisé en ce que** les parties de rectification (8) sont des organes de résistance à la ventilation configurés de manière à augmenter les résistances à la ventilation de canaux d'écoulement (13) autres que le canal d'écoulement (13) le plus long ayant la plus grande longueur de canal d'écoulement parmi tous les canaux d'écoulement (13) séparés par les parties de division en canaux d'écoulement (7), où
les parties de rectification (8) sont partiellement ou entièrement situées dans au moins une ouverture parmi les ouvertures d'entrée (11) et les ouvertures de sortie (12) des canaux d'écoulement (13) autres que le canal d'écoulement (13) le plus long de sorte qu'au moins une superficie d'ouverture de chacune des ouvertures d'entrée (11) et une superficie d'ouverture de chacune des ouvertures de sortie (12) des canaux d'écoulement (13) autres que le canal d'écoulement (13) le plus long peut être respectivement plus petite qu'une superficie d'ouverture d'une ouverture d'entrée (11) et une superficie d'ouverture d'une ouverture de sortie (12) du canal d'écoulement (13) le plus long.

2. Elément d'échange de chaleur selon la revendication 1, où
les parties de rectification (8) sont situées dans les passages d'air (5) autres que les régions de contre-courant (14).

3. Elément d'échange de chaleur selon l'une des revendications 1 et 2, où
les parties de rectification (8) sont configurées pour réduire les résistances à la ventilation des canaux d'écoulement (13) ayant des longueurs de canal d'écoulement plus grandes qu'une longueur de canal d'écoulement moyenne des canaux d'écoulement (13) séparés par les parties de division en canaux d'écoulement (7) et pour augmenter les résistances à la ventilation de canaux d'écoulement (13) ayant des longueurs de canal d'écoulement plus petites que la longueur de canal d'écoulement moyenne.

4. Elément d'échange de chaleur selon la revendication 3, où
les parties de rectification (8) sont partiellement ou entièrement situées dans les ouvertures d'entrée (11) des canaux d'écoulement (13) de sorte qu'une superficie d'ouverture de chacune des ouvertures d'entrée (11) des canaux d'écoulement (13) ayant une longueur de canal d'écoulement plus longue que la longueur de canal d'écoulement moyenne peut être plus grande qu'une superficie d'ouverture moyenne des ouvertures d'entrée (11) et qu'une superficie d'ouverture de chacune des ouvertures d'entrée (11) des canaux d'écoulement (13) ayant des longueurs de canal d'écoulement plus courtes que la longueur de canal d'écoulement moyenne peut être plus petite que la superficie d'ouverture moyenne des ouvertures d'entrée (11).

5. Elément d'échange de chaleur selon la revendication 3, où
les parties de rectification (8) sont partiellement ou entièrement situées dans les ouvertures de sortie (12) des canaux d'écoulement (13) de sorte qu'une superficie d'ouverture de chacune des ouvertures de sortie (12) des canaux d'écoulement (13) ayant une longueur de canal d'écoulement plus longue que la longueur de canal d'écoulement moyenne peut être plus grande qu'une superficie d'ouverture moyenne des ouvertures de sortie (12) et qu'une superficie d'ouverture de chacune des ouvertures de sortie (12) des canaux d'écoulement (13) ayant des longueurs de canal d'écoulement plus courtes que la longueur de canal d'écoulement moyenne peut être plus petite que la superficie d'ouverture moyenne des ouvertures de sortie (12).

6. Elément d'échange de chaleur selon la revendication 3, où
les parties de rectification (8) sont partiellement ou entièrement situées dans les ouvertures d'entrée (11) et dans les ouvertures de sortie (12) des canaux d'écoulement (13) de sorte qu'une superficie d'ouverture de chacune des ouvertures d'entrée (11) et une superficie d'ouverture de chacune des ouvertures de sortie (12) des canaux d'écoulement (13) ayant une longueur de canal d'écoulement plus longue que la longueur de canal d'écoulement moyenne peuvent être plus grandes qu'une superficie d'ouverture moyenne des ouvertures d'entrée (11) et une superficie d'ouverture moyenne des ouvertures de sortie (12), respectivement, et qu'une superficie d'ouverture de chacune des ouvertures d'entrée (11) et une superficie d'ouverture de chacune des ouvertures de sortie (12) des canaux d'écoulement (13) ayant des longueurs de canal d'écoulement plus courtes que la longueur de canal d'écoulement moyenne peuvent être plus petites que la superficie d'ouverture moyenne des ouvertures d'entrée (11) et la superficie d'ouverture moyenne des ouvertures de sortie (12), respectivement.

7. Elément d'échange de chaleur selon la revendication 1, où
les parties de division en canaux d'écoulement (7) sont partiellement intégrées dans les parties de rectification (8), et
les parties de rectification (8) sont formées par des parties courbées des parties de division en canaux d'écoulement (7) de telle manière qu'une superficie d'ouverture de canaux d'écoulement (13) ayant des longueurs de canal d'écoulement plus longues qu'une longueur de canal d'écoulement moyenne des canaux d'écoulement (13) séparés par les parties de division en canaux d'écoulement (7) peut être plus grande qu'une superficie d'ouverture moyenne, et qu'une superficie d'ouverture de canaux d'écoulement (13) ayant des longueurs de canal d'écoulement plus courtes que la longueur de canal d'écoulement moyenne peut être plus petite qu'une superficie d'ouverture moyenne.

8. Elément d'échange de chaleur selon la revendication 1, où
les parties de rectification (8) qui augmentent les résistances à la ventilation des canaux d'écoulement (13) séparés par les parties de division en canaux d'écoulement (7) font partie intégrante des parties de division en canaux d'écoulement (7), les parties de rectification (8) formant des projections sur les surfaces des parties de division en canaux d'écoulement (7) qui sont en contact avec les canaux d'écoulement (13).

9. Elément d'échange de chaleur selon la revendication 1, où
les parties de rectification (8) qui augmentent les résistances à la ventilation des canaux d'écoulement (13) séparés par les parties de division en canaux d'écoulement (7) font partie intégrante des parties écran (6), les parties de rectification (8) formant des projections sur certaines ou sur toutes les surfaces des parties écran (6) qui sont en contact avec les sections d'ouverture des canaux d'écoulement (13).

10. Elément d'échange de chaleur selon l'une quelconque des revendications 8 à 9, où
les projections sont hautes sur un côté d'ouverture et basses sur un côté intérieur.

11. Elément d'échange de chaleur selon la revendication 1, où
les parties de rectification (8) qui augmentent les résistances à la ventilation des canaux d'écoulement (13) séparés par les parties de division en canaux d'écoulement (7) forment des projections sur les plaques d'échangeur de chaleur (3).

12. Elément d'échange de chaleur selon la revendication 11, où les projections sont formées entre un côté latéral des plaques d'échangeur de chaleur (3) et un côté arrière des parties de division en canaux d'écoulement (7).

13. Elément d'échange de chaleur selon l'une quelconque des revendications 1, 2, 7, 8, 9 et 11 où
les plaques d'échangeur de chaleur (3) sont moulées en une pièce avec des cadres en résine (2) au moyen d'un processus de moulage par injection de manière à former une pluralité d'éléments d'unité (4), les plaques d'échangeur de chaleur (3) étant fabriquées en papier ou en résine et ayant des propriétés de conductivité thermique, de perméabilité à l'humidité et de protection contre les gaz, les cadres en résine (2) étant fabriqués en une résine synthétique et formant les passages d'air (5) y compris les parties écran (6), les parties de division en canaux d'écoulement (7) et les parties de rectification (8), la pluralité d'éléments d'unité (4) étant disposées les unes par-dessus les autres en lames.

14. Elément d'échange de chaleur selon l'une des revendications 1, 2, 7, 8, 9 et 11, où
les plaques d'échangeur de chaleur (3) fabriquées en une résine thermoplastique ont chacune une structure de surface irrégulière de manière à y former les parties écran (6), les parties de division en canaux d'écoulement (7) et les parties de rectification (8) de manière à former les éléments d'unité (4), les éléments d'unité (4) étant disposés les uns par-dessus les autres en lames.

15. Elément d'échange de chaleur selon l'une quelconque des revendications 1, 2, 7, 8, 9 et 11, où
le flux d'air primaire et le flux d'air secondaire circulant dans les canaux d'écoulement (13) séparés par les parties de division en canaux d'écoulement (7) sont soumis à un échange de chaleur dans l'ordre suivant : lorsqu'ils sont à angle droit ou à angle oblique l'un par rapport à l'autre, puis lorsqu'ils sont face à face et enfin lorsqu'ils sont à angle droit ou à angle oblique l'un par rapport à l'autre, les plaques d'échangeur de chaleur (3) se trouvant entre eux.

16. Elément d'échange de chaleur selon l'une quelconque des revendications 1, 2, 7, 8, 9 et 11, où
dans un plan d'illustration rectangulaire de l'élément d'échange de chaleur (1) orienté dans la direction de stratification, les ouvertures d'entrée (11) du flux d'air primaire se trouvent sur un côté court, les ouvertures d'entrée (11) du flux d'air secondaire se trouvent sur l'autre côté court et les ouvertures de sortie (12) du flux d'air secondaire et les ouvertures de sortie (12) du flux d'air secondaire se trouvent sur un côté long.
